# EUROPÄISCHE PATENTSCHRIFT

(11) **EP 3 299 996 B1**
(45) Veröffentlichungstag und Bekanntmachung des Hinweises auf die Patenterteilung: **09.03.2022**
(21) Anmeldenummer: 17171313.4
(22) Anmeldetag: 16.05.2017
(51) Int. Cl.: G06K 9/00, A01B 69/04, G06T 7/11, G06K 9/62, A01B 79/00

(54) **LANDWIRTSCHAFTLICHE ARBEITSMASCHINEN MIT BILDVERARBEITUNGSSYSTEM**
AGRICULTURAL MACHINES WITH IMAGE PROCESSING SYSTEM
MACHINES AGRICOLES DOTÉES D'UN SYSTÈME DE TRAITEMENT D'IMAGES

(30) Priorität: 27.09.2016 DE 102016118237
(43) Veröffentlichungstag der Anmeldung: 28.03.2018
(73) Patentinhaber: CLAAS Selbstfahrende Erntemaschinen GmbH, 33428 Harsewinkel (DE)
(72) Erfinder: Neitemeier, Dennis, 59510 Lippetal (DE); Korthals, Timo, 33613 Bielefeld (DE); Krause, Thilo, 39249 Glinde (DE); Skiba, Andreas, 33647 Bielefeld (DE); Kettelhoit, Boris, 33335 Gütersloh (DE)
(74) Vertreter: CLAAS Gruppe

(56) Entgegenhaltungen:
- GIULIO REINA ET AL: "Towards Autonomous Agriculture: Automatic Ground Detection Using Trinocular Stereovision", SENSORS, Bd. 12, Nr. 12, 12. September 2012 (2012-09-12), Seiten 12405-12423, XP055401661, DOI: 10.3390/s120912405
- Christiansen, P., Hansen, M. K., Steen, K. A., Karstoft, H., & Nyholm Jørgensen, R.: "Advanced sensor platform for human detection and protection in autonomous farming" In: "Precision Agriculture '15", 22. Juni 2015 (2015-06-22), Wageningen Academic Publishers, XP009500695, ISBN: 978-90-8686-267-2 Seiten 291-297, DOI: https://doi.org/10.3920/978-90-8686-814-8_ 35, * Zusammenfassung * * Abbildungen 1-4; Tabelle 1 * * Seite 293 - Seite 295 *
- Ionut Gheorghe, Weidong Li, Thomas Popham, Keith J. Burnham: "Superpixel based semantic segmentation for assistance in varying terrain driving conditions", , 1 January 2015 (2015-01-01), XP009525315, ISSN: 2194-5357, DOI: https://doi.org/10.1007/978-3-319-08422-0_ 98 ISBN: 978-3-319-08421-3 Retrieved from the Internet: URL:https://link.springer.com/chapter/10.1 007/978-3-319-08422-0_98 [retrieved on 2021-02-01]

## Beschreibung

Die vorliegende Erfindung betrifft eine landwirtschaftliche Arbeitsmaschine gemäß dem Oberbegriff des Anspruchs 1.

Das Übersehen von Hindernisse im Umfeld der landwirtschaftlichen Arbeitsmaschine, wie zum Beispiel ein Autoreifen im Erntebestand, kann zu Beschädigungen der landwirtschaftlichen Arbeitsmaschine führen. Des Weiteren können Unregelmäßigkeiten im Erntebestand, wie zum Beispiel Unkrautpflanzen, zur Minderung der Qualität des abgeernteten Erntegutes führen. Eine manuelle Steuerung der landwirtschaftlichen Arbeitsmaschine, zum Beispiel während einer Ernte, erfordert deshalb die ständige Aufmerksamkeit des Fahrzeugführers.

Während ein automatische Routenführungen mittels GPS oder topographischer Karten den Aufwand für die Steuerung der landwirtschaftliche Arbeitsmaschine verringert, können unbekannte neue Hindernisse oder aktuelle Unregelmäßigkeiten im Erntebestand von diesen Systemen nicht erfasst werden. Somit bleibt das Erfordernis zur ständigen Aufmerksamkeit des Fahrzeugführers weitestgehend bestehen. Um frühzeitig vor Hindernissen und Unregelmäßigkeiten gewarnt zu werden sind deshalb lokale Sensoren, vorzugsweise direkt an der landwirtschaftlichen Arbeitsmaschine, erforderlich, die das Umfeld überwachen.

Aus GIULIO REINA ET AL: "Towards Autonomous Agriculture: Automatic Ground Detection Using Trinocular Stereovision", SENSORS, Bd. 12, Nr. 12, 12. September 2012 (2012-09-12), Seiten 12405-12423, ist ein Framework zur Bilderkennung für Traktoren bekannt.

Aus Christiansen, P., Hansen, M. K., Steen, K. A., Karstoft, H., & Nyholm Jergensen, R.: "Advariced sensor platform for human detection and protection in autonomous farming" In: "Precision Agriculture '15", 22. Juni 2015 (2015-06-22), Wageningen Academic Publishers, Seiten 291-297, ist eine Sensorplattform mit Bilderkennung für Traktoren bekannt.

Aus Gheorghe I., Li W., Popham T., Burnham K.J. (2015) Superpixel based semantic segmentation for assistance in varying terrain driving conditions. In: Selvaraj H., Zydek D., Chmaj G. (eds) Progress in Systems Engineering. Advances in Intelligent Systems and Computing, vol 366. Springer, ist eine Superpixel-basierte semantische Segmentierung unter Verwendung einer linearen Support Vector Machine zur visuellen Geländeklassifizierung bekannt.

Die Druckschrift EP 2 143 316 A1 offenbart ein System zur frühzeitigen Erfassung von Erntegutflussproblemen oder Fremdkörpern im Erntegutfluss und zur teilweisen automatischen Steuerung einer selbstfahrenden Erntemaschine oder deren Arbeitselementen. Dazu wird der Erntegutfluss mittels Sensoren, zum Beispiel einer Kamera, überwacht. Es werden zwei Bildauswerteverfahren vorgeschlagen. Das erste Bildauswerteverfahren stellt Unregelmäßigkeiten im Erntegutfluss mittels Bewegungsunschärfen dar. Das zweite Bildauswerteverfahren erfasst eine Verschiebung von Erntegutmerkmalen mittels eines Bildvergleichsverfahrens aufeinanderfolgender Bilder zur Ermittlung von zum Beispiel Fremdkörpern. Nachteilig an den vorgeschlagenen Systemen ist, dass Sie keine Objekte oder Anomalien identifizieren.

Die Druckschrift US 2015/0319911 A1 offenbart ein analoges Verfahren zur Druckschrift EP 2 143 316 A1. Zusätzlich kann das Verfahren Landmarken im Umfeld detektieren. Hindernisse werden jedoch nicht erfasst oder identifiziert.

Aufgabe der Erfindung ist es, die beschriebenen Nachteile des Standes der Technik zu beheben und insbesondere landwirtschaftliche Arbeitsmaschine mit einem Bildverarbeitungssystem zu schaffen, die Anomalien, Hindernisse und/oder Unregelmäßigkeiten im Erntebestand, zuverlässig und schnell erfasst und identifiziert.

Indem eine Landwirtschaftliche Arbeitsmaschine ein Bildverarbeitungssystem, eine Regel-und Steuereinheit, eine Datenausgabeeinheit und zumindest ein Bildgenerierungssystem umfassend, wobei das Bildverarbeitungssystem eine Auswahl an den Umgebungsbildern in einer Bildanalyseeinheit verarbeitet, wobei das Bildgenerierungssystem dazu eingerichtet ist, Umgebungsbilder zu generieren und die Umgebungsbilder an das Bildverarbeitungssystem zu übergeben, und das Bildverarbeitungssystem dazu eingerichtet ist, in einem ersten Schritt die übergebenen Umgebungsbilder vorzuverarbeiten, in einem weiteren Schritt die vorverarbeiteten Umgebungsbilder zu segmentieren, in einem nächsten Schritt die entstehenden Segmente zu klassifizieren, sodass Anomalien identifizierbar sind, und in einem folgenden Schritt einen weiterverarbeitbaren Bilddatensatz zu generieren, und die Regel- und Steuereinheit dazu eingerichtet ist, die landwirtschaftliche Arbeitsmaschine anhand des weiterverarbeitbaren Bilddatensatzes zu steuern, wird sichergestellt, dass Anomalien zuverlässig und schnell erfasst und identifiziert werden. Vorzugsweise werden die Anomalien vom Bildverarbeitungssystem automatisch identifiziert. Des Weiteren wird die landwirtschaftliche Arbeitsmaschine vorzugsweise autonom oder teilautonom anhand der identifizierten Anomalien und des weiterverarbeitbaren Bilddatensatzes gesteuert. Ein visuelles Identifizieren von Anomalien durch den Fahrzeugführer entfällt. Der Fahrzeugführer wird entlastet. Auch ein alternatives manuelles Zuweisen von Bezeichnungen von Anomalie zu erfassten unbestimmten Objekten entfällt. Durch das Klassifizieren wird erfassten Objekten jeweils eine für den Anwender klare Information zugeordnet. Es hat sich zudem gezeigt, dass durch das vorherige Segmentieren des Bildes das Klassifizieren und Identifizieren beschleunigt werden, wodurch das Verfahren eine nahezu laufzeitfähige Identifizierung von Anomalien ermöglicht und eine erforderliche Computerrechenleistung senkt. Das Vorverarbeiten hingegen erhöht die Reproduzierbarkeit und damit die Zuverlässigkeit des Bildverarbeitungssystems. Zudem wird das Bildanalysesystem durch das Vorverarbeiten in der Regel beschleunigt.

Vorzugsweise weist die landwirtschaftlichen Arbeitsmaschine eine Anzeigeeinheit zur Visualisierung des weiterverarbeitbaren Bilddatensatzes und der Anomalien auf. Indem die identifizierten Anomalien und der weiterverarbeitbare Bilddatensatz dem Fahrzeugführer angezeigt werden, kann der Fahrzeugführer zum Beispiel die Art der Anomalie am Bildschirm sofort ablesen und gegebenenfalls selbst reagieren. Die Anomalien können auf Basis Ihrer Bedeutung für den Fahrzeugführer in einer Klasse gruppiert werden und einheitlich als Klasse dargestellt werden. Insbesondere indem verschiedene Klassen in einer visuellen Darstellung mit gleichen Farben zusammengefasst werden, wird der Fahrzeugführer entlastet. Er muss nicht mehr entscheiden, ob es sich zum Beispiel um ein Hindernis handelt, sondern es wird vorzugsweise sofort als solches kenntlich gemacht. Ein visuelles Identifizieren von Anomalien entfällt somit.

In einer vorteilhaften Ausgestaltung der Erfindung umfasst das Bildgenerierungssystem zumindest einen optischer Sensor, wobei der zumindest eine optische Sensor eine Kamera, einen Radarsensor und/oder einen Laserscanner umfasst, wobei die Kamera als eine Monochromkamera, eine Infrarotkamera und/oder eine Farbkamera ausgebildet ist. Dadurch stehen kontinuierlich aktuelle Umgebungsbilder für das Bildverarbeitungssystem zu Verfügung. Insbesondere steht bei einer Farbkamera eine Information über die Intensität und eine Farbe zur Verfügung. Zudem wird im Falle von mehreren Sensoren ein größerer Bereich der Umgebung abgedeckt. Durch Nutzung von Radarsensoren und/oder Laserscannern werden Bilddaten, die zum Beispiel durch Kamerabilder erzeugt werden, erweitert. So stehen dann z.B. Entfernungsmessungen basierend auf Signallaufzeiten und/oder Bilddaten zu abgeschatteten/verdeckten Anomalien zur Verfügung. Insbesondere können durch Laserscanner und/oder Radarsensoren auf einfache Weise Ausmaße, insbesondere eine Höhe, von Objekten ermittelt werden.

In einer vorteilhaften Ausgestaltung der Erfindung weist die landwirtschaftliche Arbeitsmaschine mindestens ein Anbaugerät, insbesondere ein Schneidwerk, auf. Dadurch kann der Einsatzbereich der landwirtschaftlichen Arbeitsmaschine an die Ernteanforderungen angepasst werden.

In einer weiteren vorteilhaften Ausgestaltung der Erfindung erfassen die Umgebungsbilder eine Umgebung der landwirtschaftlichen Arbeitsmaschine, wobei die Umgebung ein Umfeld, bevorzugt ein Vorfeld, der landwirtschaftlichen Arbeitsmaschine und/oder Bereiche der landwirtschaftlichen Arbeitsmaschine selbst umfasst. Dadurch weist die landwirtschaftliche Arbeitsmaschine nicht nur eine Umfeldüberwachung, sondern auch eine Überwachung von Anbaugeräten, zum Beispiel dem Schneidwerk, und/oder Teilen der landwirtschaftlichen Arbeitsmaschine, zum Beispiel einer Überladevorrichtung, auf.

Die Erfindung umfasst in dem ersten Schritt das Vorverarbeiten der übergebenen Umgebungsbilder mindestens eine Normierung der übergebenen Umgebungsbilder und mindestens eine Farbnormierung, und eine Auswahl eines Auswertebereichs in den übergebenen Umgebungsbildern, wobei bei der Intensitätsnormierung jeweils ein pixelspezifischer Intensitätskorrekturfaktor für jedes Pixel mittels mindestens eines Referenzbildes bestimmt wird, und die Intensität jedes Pixels der übergebenen Umgebungsbilder mit dem jeweiligen pixelspezifischen Intensitätskorrekturfaktor korrigiert wird. Bei der Farbnormierung kann jeweils ein Intensitätskorrekturwert für jeden Farbkanal der übergebenen Umgebungsbilder ermittelt werden und die Intensitäten der Pixel jedes Farbkanals einheitlich um den jeweiligen Intensitätskorrekturwert korrigiert werden, wobei jeder Intensitätskorrekturwert mittels Bestimmung einer Differenz der gemessenen jeweiligen Intensitäten der dem jeweiligen Farbkanal zugeordneten Farbpixel eines Referenzobjekts mit bekannter Farbe in den übergebenen Umgebungsbildern zu den bekannten jeweiligen Intensitäten der dem jeweiligen Farbkanal zugeordneten Farbpixel eines Referenzobjekts mit bekannter Farbe in den übergebenen Umgebungsbildern ermittelt wird, wobei die gemessenen jeweiligen Intensitäten insbesondere aus einer Auswahl von Farbpixel des Referenzobjekts mit bekannter Farbe und durch Umgebungsbildung eines Mittelwerts aus ihnen ermittelt werden.

Dadurch wird ein reproduzierbares Ergebnis geschaffen, welches unabhängig von Umgebungsbedingen wie Schattenwurf durch zum Beispiel Bäume, einer Tageszeit, Witterungsbedingungen und/oder Jahreszeiten ist. Intensitätsfehler, hervorgerufen durch Objektivfehler der Kamera, insbesondere bei Weitwinkel-Objektiven, oder durch Reflexionen stark reflektierender Flächen, wie zum Beispiel lackierter Teile einer landwirtschaftlichen Arbeitsmaschine, werden des Weiteren auf einfache Weise korrigiert. Zudem wird die Farbechtechtheit sichergestellt und insbesondere Farbverfälschungen durch verschiedene Lichtbedingungen und/oder Kameraeinstellungen vermieden. Des Weiteren wird durch die mindestens eine Normierung eine folgende Segmentierung vereinfacht.

In einer weiteren bevorzugten Ausgestaltung umfasst die Auswahl des Auswertebereichs der übergebenen Umgebungsbilder jeweils einen Ausschnitt der übergebenen Umgebungsbilder, wobei der Auswertebereich sich insbesondere bis zu einer Entfernung von weniger als 20 Metern zum optischen Sensor, weiterhin insbesondere bis zu einer Entfernung von sechs Metern zum optischen Sensor, erstreckt. Durch diese Einschränkung des auszuwertenden Bildausschnittes wird eine durch das Bildverarbeitungssystem zu verarbeitende Bilddatenmenge reduziert.

Indem das Bildverarbeitungssystem in dem weiteren Schritt die vorverarbeiteten Umgebungsbilder in Segmente mit Pixeln gleicher und/oder ähnlicher Farbe und/oder Intensität segmentiert, insbesondere mittels eines Superpixel-Verfahrens, weiterhin insbesondere mittels eines SEED-Superpixel-Verfahrens, ist in einer vorteilhaften Ausgestaltung der Erfindung sichergestellt, dass ein Objekt und dessen Objektkanten zuverlässig erfasst werden kann. Insbesondere das SEED-Superpixel-Verfahren bildet uniforme Segmente mit einer hohen Randgenauigkeit zum Objekt im Bild. Zudem ist das SEED-Superpixel-Verfahren ein schnelles Segmentierverfahren.

In dem nächsten Schritt klassifiziert das Bildverarbeitungssystem die Segmente in der Weise, dass es zunächst aus jedem Segment jeweils mindestens ein Segmentmerkmal berechnet, wobei das mindestens eine Segmentmerkmal aus den jeweiligen Intensitäten der Pixel des jeweiligen Segments, und/oder aus den Grauwerten der Pixel des jeweiligen Segments berechnet wird, wobei die Segmentmerkmale insbesondere eine kleinste Intensität des jeweiligen Segments, eine größte Intensität des jeweiligen Segments, eine Differenz aus der größten und der kleinsten Intensität des jeweiligen Segments, ein Histogramm des jeweiligen Segments, einen horizontalen Intensitätsgradienten des jeweiligen Segments, einen vertikalen Intensitätsgradienten des jeweiligen Segments, ein Histogramm des vertikalen und/oder des horizontalen Intensitätsgradienten des jeweiligen Segments, und/oder mindestens einen Intensitätsmittelwert des jeweiligen Segments, insbesondere einen arithmetischen Intensitätsmittelwert und/oder einen Intensitätsmedian des jeweiligen Segments, umfassen. Die Segmentmerkmale sind mathematische Zuordnungskriterien für jedes Segment, womit dann im Laufe der Klassifizierung den Segmenten Klassen auf einfache und schnelle Weise zugeordnet werden können. Zudem werden die Informationen jedes Pixels eines Segments mit dem Segmentmerkmal in einem einzigen Wert für das gesamte Segment zusammengefasst. Somit sind folgende Berechnungen vereinfacht und beschleunigt. Des Weiteren kann dadurch das Bildverarbeitungssystem auf einfache und präzise Weise eine Klassifizierung durchführen.

In einer weiteren vorteilhaften Ausgestaltung wird eine Auswahl an Segmentmerkmalen aus einer Grauwertematrix des jeweiligen Segments berechnet, insbesondere eine Homogenität, eine Energie, eine Korrelation und/oder ein Kontrast der Grauwertematrix, wobei die Grauwertematrix eine Häufigkeit einer Paarung der Intensitätsbereiche und/oder der Grauwertbereiche zweier benachbarter Pixel des jeweiligen Segments aufweist, und/oder die Segmentmerkmale umfassen eine vertikale Position im segmentierten Umgebungsbild und/oder einen Formschwerpunkt des Segments. Dadurch kann das Bildverarbeitungssystem auf eine weitere einfache und präzise Weise eine Klassifizierung durchführen und eine Positionen der Pixel im Bezug zum Segment und/oder zum gesamten Bild, als Segmentmerkmale verwenden.

In dem nächsten Schritt klassifiziert das Bildverarbeitungssystem mittels einer Support Vector Machine, wobei die Support Vector Machine ein mathematisches Verfahren zum Klassifizieren von Segmenten ist, jedes Segment mittels des mindestens einen berechneten Segmentmerkmals in eine Klasse und klassifizierte Umgebungsbilder mit klassifizierten Segmenten werden erzeugt, wobei jeder Klasse mindestens ein Segmentmerkmal zugeordnet ist, wobei insbesondere vorab eine Klassifikationsgüte der Segmentmerkmale für die jeweiligen Klassen bestimmt und zur Auswahl der geeignetsten Segmentmerkmale für die Support Vector Machine verwendet wird, und insbesondere die Support Vector Machine Segmentmerkmale mit einer hohen Klassifikationsgüte, insbesondere mit der höchsten Klassifikationsgüte, zur Klassifizierung der Segmente verwendet, und insbesondere die Wahrscheinlichkeiten für eine richtige Klassifizierung für jedes Segmentmerkmal und/oder Segment berechnet werden. Damit wird sichergestellt, dass die Segmente, und vorzugsweise die damit erfassten Objekte, schnell und zuverlässig klassifiziert werden können, und die Anomalien, insbesondere automatisch, identifizierbar sind und jeder Klasse auf einfache Weise einem Segment zugewiesen werden kann.

Damit fehlerhafte Klassifizierungen vermieden und die Zuverlässigkeit des Bildanalysesystems erhöht wird, ist in einer vorteilhaften Ausgestaltung der Erfindung vorgesehen, dass das Bildverarbeitungssystem in dem nächsten Schritt nach der Klassifizierung der Segmente die Klassifizierungen nachverarbeitet, wobei falsche Klassifizierungen und/oder Klassifizierungen mit berechneten niedrigen Wahrscheinlichkeiten gelöscht werden, wobei zur Identifizierung falscher Klassifizierungen mehrere direkt aufeinanderfolgende klassifizierte Umgebungsbilder mit klassifizierten Segmenten verglichen werden, und Klassifizierungen von Segmenten, die nur in einem einzelnen klassifizierten Bild vorhanden sind, als falsch gewertet.

Das Bildverarbeitungssystem generiert in dem folgenden Schritt aus den klassifizierte Umgebungsbildern mit den klassifizierten Segmenten mittels Warpen, Stitching und/oder eines Übertrags in ein Occupancy Grid einen weiterverarbeitbaren Bilddatensatz, wobei insbesondere der weiterverarbeitbare Bilddatensatz mit Datensätzen anderer Sensoren, insbesondere optischer Sensoren, zusammengeführt und zu einem weiteren weiterverarbeitbaren Bilddatensatz weiterverarbeitet wird. Dadurch können Bilddatensätze von mehreren optischen Sensoren auf einfache Weise zusammengeführt werden. Zudem können Entfernungen der Anomalien zueinander und/oder zur landwirtschaftlichen Arbeitsmaschine übersichtlich dargestellt werden. Des Weiteren können dadurch mehrere optische Sensoren genutzt werden, um den Abdeckungsgrad der Umgebung zu erhöhen. Zudem können Klassifizierungen verbessert werden, da durch andere optische Sensorarten, wie zum Beispiel im Falle von Radarsensoren und/oder Laserscanner, neue Segmentmerkmale für das Bildverarbeitungssystem zur Verfügung stehen. Insbesondere können Radarstrahlen zum Beispiel einen Erntebestand durchdringen und verdeckte Anomalien, insbesondere Hindernisse, erfassen. Die Laserscanner können hingegen bevorzugt präzise Entfernungen von Anomalien, insbesondere auch von kleinen Anomalien, erfassen.

Vorzugsweise ist die Datenausgabeeinheit dazu eingerichtet, mindestens einen der weiterverarbeitbaren Bilddatensätze anderen Systemen einer landwirtschaftlichen Arbeitsmaschine, insbesondere einer Regel- und Steuereinheit, zur Verfügung zu stellen. Dadurch können andere Systeme den weiterverarbeitbaren Bilddatensatz zur Steuerung der landwirtschaftlichen Arbeitsmaschine und/oder der Anbaugeräte einsetzen.

In einer vorteilhaften Ausgestaltung der Erfindung ist mindestens einer der weiterverarbeitbaren Bilddatensätze von der landwirtschaftlichen Arbeitsmaschine zur Umfelderkennung, insbesondere zur, vorzugsweisen automatischen, Identifizierung von Anomalien im Vorfeld, verwendbar. Dadurch kann die Umgebung der landwirtschaftlichen Arbeitsmaschine, insbesondere im Bereich vor der landwirtschaftlichen Arbeitsmaschine, auf einfache Weise überwacht werden und rechtzeitig vor Hindernissen und/oder vor Unregelmäßigkeiten im dem Erntebestand gewarnt, und/oder Maßnahmen zur Steuerung der landwirtschaftlichen Arbeitsmaschine und/oder ihrer Arbeitsorgane eingeleitet werden. Der Fahrzeugführer wird entlastet. Insbesondere kann das Bildverarbeitungssystem zur autonomen oder teilautonomen Steuerung der landwirtschaftlichen Arbeitsmaschine verwendet werden.

In einer weiteren vorteilhaften Ausgestaltung der Erfindung ist die Regel- und Steuereinheit dazu eingerichtet ist, die landwirtschaftliche Arbeitsmaschine in Abhängigkeit von den Anomalien derart zu steuern, dass eine Beschädigung der landwirtschaftlichen Arbeitsmaschine, eine Verletzung von Lebewesen, eine Aufnahme von eine Erntegutqualität mindernden Pflanzen vermieden und/oder ein Erntegutbestand effizient abgeerntet wird. Dadurch wird der Fahrzeugführer entlastet.

In einer weiteren vorteilhaften Ausgestaltung der Erfindung ist die Regel- und Steuereinheit dazu eingerichtet, in Abhängigkeit von dem erfindungsgemäßen weiterverarbeitbaren Bilddatensatz die landwirtschaftliche Arbeitsmaschine bei einer Erfassung und einer Identifizierung von Lagergetreide und/oder Beiwuchs im Vorfeld derart zu steuern, dass das mindestens eine Anbaugerät vor dem Lagergetreide und/oder dem Beiwuchs angehoben wird. Dadurch wird die Aufnahme von Pflanzen vermieden, welche die Qualität das bereits geerntete Erntegut vermindern würden.

In einer weiteren alternativen vorteilhaften Ausgestaltung der Erfindung ist die Regel- und Steuereinheit dazu eingerichtet, in Abhängigkeit von dem erfindungsgemäßen weiterverarbeitbaren Bilddatensatz die landwirtschaftliche Arbeitsmaschine bei einer Erfassung und einer Identifizierung von Lagergetreide im Vorfeld derart zu steuern, dass das mindestens eine Anbaugerät vor dem Lagergetreide abgesenkt wird. Dadurch werden die Pflanzen im Lagergetreide besser erfasst und Ernteverluste reduziert.

In einer weiteren vorteilhaften Ausgestaltung der Erfindung ist die Regel- und Steuereinheit dazu eingerichtet, die landwirtschaftliche Arbeitsmaschine bei einer Erfassung und einer Identifizierung von Hindernissen im Vorfeld derart zu steuern, dass die landwirtschaftliche Arbeitsmaschine den Hindernissen ausweicht, insbesondere durch Hebung von Anbaugeräten über niedrige Hindernisse, insbesondere durch Stoppen der landwirtschaftlichen Arbeitsmaschine und/oder insbesondere durch Umfahren von hohen Hindernissen. Dadurch wird der Fahrzeugführer entlastet und je nach Anomalie eine passende Steuerstrategie automatisch gewählt. Insbesondere wird dadurch eine Gefahr einer Kollision mit einem Hindernis reduziert.

In einer weiteren vorteilhaften Ausgestaltung der Erfindung ist die Regel- und Steuereinheit dazu eingerichtet, in Abhängigkeit von dem erfindungsgemäßen weiterverarbeitbaren Bilddatensatz die landwirtschaftliche Arbeitsmaschine bei einer Erfassung und einer Identifizierung von einer Fahrspur derart zu steuern, dass sie in und/oder entlang der Fahrspur fährt. Hierdurch wird der Fahrzeugführer weiter entlastet.

In einer weiteren vorteilhaften Ausgestaltung der Erfindung ist die Regel- und Steuereinheit dazu eingerichtet, in Abhängigkeit von dem erfindungsgemäßen weiterverarbeitbaren Bilddatensatz die landwirtschaftliche Arbeitsmaschine bei einer Erfassung und einer Identifizierung von einer Bestandskante derart zu steuern, dass die landwirtschaftliche Arbeitsmaschine entlang der Bestandskante fährt. Hierdurch wird der Fahrzeugführer weiter entlastet und ein effizienter Ernteprozess sichergestellt.

In einer weiteren vorteilhaften Ausgestaltung der Erfindung ist die Regel- und Steuereinheit dazu eingerichtet, in Abhängigkeit von dem erfindungsgemäßen weiterverarbeitbaren Bilddatensatz die landwirtschaftliche Arbeitsmaschine bei einer Erfassung und einer Identifizierung von Lebewesen im Vorfeld derart zu steuern, dass die landwirtschaftliche Arbeitsmaschine stoppt. Dadurch wird sichergestellt, dass die landwirtschaftliche Arbeitsmaschine zeitnah gestoppt wird.

Die vorliegende Erfindung wird nachstehend anhand von in den Zeichnungen dargestellten Ausführungsbeispielen näher erläutert. Es zeigen:
- Fig. 1: eine schematische Darstellung der landwirtschaftlichen Arbeitsmaschine und des Bildverarbeitungssystems;
- Fig. 2: eine schematische Darstellung der Vorverarbeitung des Bildverarbeitungssystems;
- Fig. 3: eine schematische Darstellung der Segmentierung des Bildverarbeitungssystems;
- Fig. 4: eine schematische Darstellung der Klassifizierung des Bildverarbeitungssystems;
- Fig. 5: eine schematische Darstellung der Generierung des weiterverarbeitbaren Bilddatensatzes;
- Fig. 6: eine schematische Einteilung von Klassen des Bildverarbeitungssystems;

- Fig. 7: eine schematische Darstellung von Anwendungen des Bildverarbeitungssystems zur Identifikation von Anomalien und zwar in (a) Lagergetreide; in (b) Bestandslücken; in (c) einer Fahrspur; in (d) Beiwuchs; in (e) ein niedriges Hindernis und in (f) hohes Hindernis.

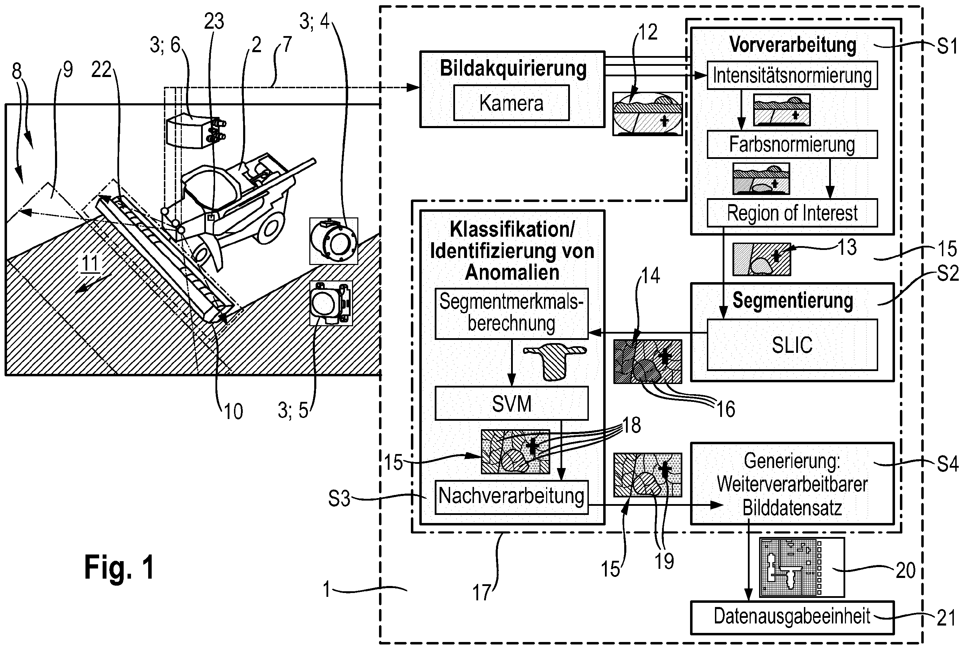

Fig.1 zeigt schematisch eine an sich bekannte und nicht näher beschriebene landwirtschaftliche Arbeitsmaschine 2 mit dem Bildverarbeitungssystem 1. Die landwirtschaftlichen Arbeitsmaschine 2 umfasst ein Bildverarbeitungssystem 1, eine Regel-und Steuereinheit 23, eine Datenausgabeeinheit 21 und zumindest ein Bildgenerierungssystem 3. Dabei verarbeitet das Bildverarbeitungssystem 1 eine Auswahl an den Umgebungsbildern 7 in einer Bildanalyseeinheit 17. Die Bildanalyseeinheit 17 ist vorzugsweise als eine Recheneinheit ausgebildet. Das Bildgenerierungssystem 3 ist dazu eingerichtet, Umgebungsbilder 7 zu generieren und die Umgebungsbilder 7 an das Bildverarbeitungssystem 1 zu übergeben. Das Bildverarbeitungssystem 1 ist dazu eingerichtet, in einem ersten Schritt S1 die übergebenen Umgebungsbilder 12, vorzuverarbeiten, insbesondere zu vorverarbeiteten Umgebungsbilder 13, in einem weiteren Schritt S2 die vorverarbeiteten Umgebungsbilder 13 zu segmentieren, in einem nächsten Schritt S3, die entstehenden Segmente 16 zu klassifizieren, sodass Anomalien 19 identifizierbar sind, und in einem folgenden Schritt S4 einen weiterverarbeitbaren Bilddatensatz 20 zu generieren. Übergebene Umgebungsbilder 12, insbesondere deren Bildeigenschaften, werden im ersten Schritt S1 normiert. Vorzugsweise wird zudem ein Ausschnitt jedes übergebenen Bildes 12 zum Auswerten ausgewählt. Aus den segmentierten Umgebungsbildern 14 werden beim Klassifizieren klassifizierte Umgebungsbilder 15. Die

Identifizierung der Anomalien 19 erfolgt beim Klassifizieren.

Die Regel- und Steuereinheit 23 ist dazu eingerichtet, die landwirtschaftliche Arbeitsmaschine 2 anhand des weiterverarbeitbaren Bilddatensatzes 20 zu steuern. Vorzugsweise steuert die Regel- und Steuereinheit 23 die landwirtschaftlichen Arbeitsmaschine 2 autonom oder teilautonom.

Zusätzlich weist die landwirtschaftliche Arbeitsmaschine 2 bevorzugt eine Anzeigeeinheit zur Visualisierung des weiterverarbeitbaren Bilddatensatzes 20 und der Anomalien 19 auf. Die Anzeigeeinheit ist bevorzugt als ein Display ausgestaltet. Es zeigt die identifizierten Anomalien 19 vorzugsweise eingefärbt an.

Die landwirtschaftliche Arbeitsmaschine 2 umfasst vorzugsweise Mähdrescher, Feldhäcksler und/oder Traktoren. An ihr können ein oder mehrere Anbaugeräte 22 angeordnet sein. Die landwirtschaftliche Arbeitsmaschine 2 ist hier als Mähdrescher mit einem Schneidwerk als Anbaugerät 22 ausgebildet. An der landwirtschaftlichen Arbeitsmaschine 2 ist zudem ein Bildgenerierungssystem 3 angeordnet.

Das Bildgenerierungssystem 3 ist vorzugsweise zumindest ein optischer Sensor. Die optischen Sensoren sind vorzugsweise als mindestens eine Kamera 4 ausgebildet. Die Kamera 4 ist bevorzugt als eine Monochromkamera, eine Infrarotkamera und/oder eine Farbkamera ausgebildet. Des Weiteren umfasst das Bildgenerierungssystem 3 vorzugsweise mindestens einen Radarsensor 5 und/oder mindestens einen Laserscanner 6. Es liegt im Rahmen der Erfindung andere optische Sensoren oder eine beliebige Anzahl an optischen Sensoren einzusetzen. Bevorzugt generiert die Kamera 4 Umgebungsbilder 7 von einer Umgebung 8 der landwirtschaftlichen Arbeitsmaschine 2.

Die Umgebungsbilder 7 erfassen eine Umgebung 8 der landwirtschaftlichen Arbeitsmaschine 2. Vorzugsweise umfasst die Umgebung 8 ein Umfeld der landwirtschaftlichen Arbeitsmaschine 2 und/oder Bereiche der landwirtschaftlichen Arbeitsmaschine 2 selbst. Vorzugsweise ist das Umfeld ein Vorfeld 9 der landwirtschaftlichen Arbeitsmaschine 2. Das Vorfeld 9 erstreckt sich in Fahrtrichtung 11 vor der landwirtschaftlichen Arbeitsmaschine 2 vorzugsweise mindestens über eine Breite entsprechend einer Breite des Anbaugerätes 22. Die Umgebung 8 umfasst vorzugsweise auch Bereiche der landwirtschaftlichen Arbeitsmaschine 2 selbst. Insbesondere umfassen die Bereiche der landwirtschaftlichen Arbeitsmaschine 2 einen Bereich des Anbaugerätes 10.

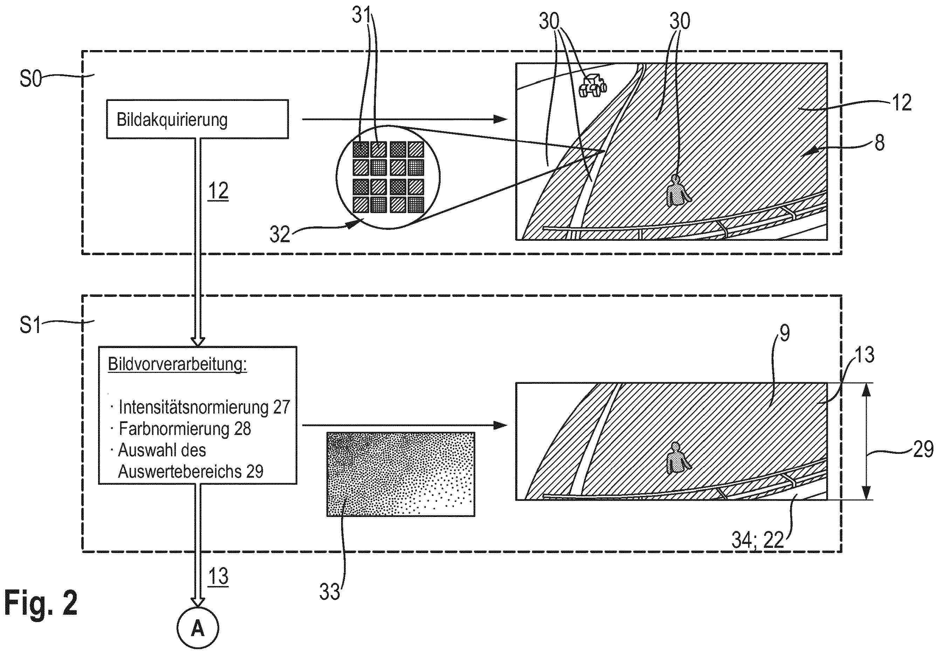

Fig. 2 bis Fig. 5 zeigen Teile des Bildverarbeitungssystems 1 mit Umgebungsbildern 7 und/oder schematischen Detaildarstellungen. Die Umgebungsbilder 7 sind vorzugsweise digitale Umgebungsbilder 7. Die Anzahl von Umgebungsbildern 7 ist vorzugsweise ein Teil einer Bildreihe oder eines Videos, insbesondere sind sie Frames. Die Umgebungsbilder 7 werden mittels eines Bildsensors, zum Beispiel mittels eines Bayer-Sensors mit einem Bayer-Pixelmuster, erzeugt (siehe Figur 2). Die Umgebungsbilder 7, und insbesondere der Bildsensor, sind aus Pixeln 31 aufgebaut. Jedes Pixel 31 weist eine Intensität 35 auf. Die Intensitäten 35 jedes Pixels 31 werden erfasst. Die Intensitäten 35 sind vorzugsweise ein Maß für die Lichtenergie pro Fläche des Bildsensors und pro Zeiteinheit. Des Weiteren ist insbesondere jedes Pixel 31 ein Monochrompixel oder ein Farbpixel. In Abhängigkeit eines Bildsensortyps sind bei Farbpixeln Farbfilter auf der Oberfläche jedes Pixels 31 des Bildsensors aufgebracht. Bevorzugt weisen die Bildsensoren von Farbkameras, insbesondere der Bayersensor, verschiedene Arten von Farbpixeln auf, wobei jede Art einen anderen Farbfilter aufweist. Gleiche Farbpixel des Bildes 7 sind bevorzugt jeweils einem Farbkanal des Bildes 7 zugeordnet. Dabei sind eine Anzahl und eine Aufteilung der Farbkanäle im Wesentlichen vom Bildsensortyp abhängig. Zum Beispiel teilen sich die Farbpixel und die Farbkanäle beim Bayer-Bildsensor in rote, grüne und blaue Farbpixel und Farbkanäle auf. Aus den Intensitäten unterschiedlicher Farbpixel sind Farben ausbildbar, wobei jede Farbe zu einem Grauwert umwandelbar ist. Zur Berechnung des Grauwertes werden die Intensitäten 35 der einzelnen Farbkanäle vorzugsweise derart korrigiert werden, dass sie dem menschlichen Sehen nachempfunden sind. Anschließend werden vorzugsweise die derart korrigierten Intensitäten 35 benachbarten Farbpixel zu einem Grauwert aufsummiert. Die Monochrompixel des Bildes 7 sind bevorzugt einem Graukanal des Bildes 7 zugeordnet. Monochrompixel weisen vorzugsweise keinen Farbfilter auf. Auf ihnen kann zwar auch ein Filter aufgebracht sein; dieser Filter ist dann jedoch im Wesentlichen einheitlich für alle Monochrompixel und filtert lediglich Licht aus einem nicht sichtbaren Lichtspektrum heraus.

Bevorzugt weisen Bildsensoren von Monochromkameras Monochrompixel auf. Zudem weist auch eine Auswahl von Farbkameras Bildsensoren mit Monochrompixeln zusammen mit Farbpixeln auf.

Es liegt im Rahmen der Erfindung andere Bildsensortypen für Farbkameras zu verwenden, die sich im Aufbau vom Bayer-Sensor unterscheiden. So ist es denkbar, Bildsensoren mit einem anderen Pixelmuster, zum Beispiel einem XTrans-Bildsensor, oder einen Bildsensor mit einem anderen Aufbauprinzip, zum Beispiel einen Foveon-Bildsensor, zu verwenden. Im Falle des Foveon-Bildsensors umfasst jeder Pixel 31 mehrere Farbkanäle. Die Pixel 31 sind dabei im Wesentlichen einheitlich und weisen keinen Farbfilter auf.

Fig. 2 zeigt ein an das Bildverarbeitungssystem 1 übergebenes Bild 12 aus einer Auswahl von Umgebungsbildern 7 der Umgebung 8 der landwirtschaftlichen Arbeitsmaschine 2, das übergeben wurde. Die übergebenen Umgebungsbilder 12 umfassen unbekannte Objekte 30, die vorzugsweise voneinander visuell, insbesondere mittels Rändern, abgrenzbare Teile der übergebenen Umgebungsbilder 12 sind.

Die übergebenen Umgebungsbilder 12 werden in einem ersten Schritt S1 des Bildverarbeitungssystem 1 vorverarbeitet. Dabei wird mindestens eine Normierung der übergebenen Umgebungsbilder 12 durchgeführt. Mindestens wird eine Intensitätsnormierung 27, eine Farbnormierung 28 und eine Auswahl eines Auswertebereichs 29 in den übergebenen Umgebungsbildern 12 durchgeführt.

Die Intensitätsnormierung 27 kann mit mindestens einem Farb- oder Graukanal durchgeführt werden. Bei der Intensitätsnormierung 27 wird hier mindestens ein Referenzbild 33 erstellt, das zum Beispiel objektivbedingte oder umgebungslichtbedingte Intensitätsverläufe darstellt. Bevorzugt werden dafür mehrere Referenzbilder 33 erzeugt und zu einem Referenzbild 33 übereinandergelegt. Vorzugsweise wird die maximale Intensität 35 eines Pixels 31 des Referenzbildes 33 zusammen mit Intensitätsverläufen im Referenzbild 33 zur Berechnung eines pixelspezifischen Intensitätskorrekturfaktors für jedes Pixel 31 verwendet. Anschließend wird jeder Pixel 31 der übergebenen Umgebungsbilder 12 mit dem pixelspezifischen Intensitätskorrekturfaktor, bevorzugt multiplikativ, korrigiert.

Bei der Farbnormierung 28 wird bevorzugt ein Referenzobjekt 34 mit bekannter Farbe in den übergebenen Umgebungsbildern 12, insbesondere in einer Auswahl an übergebenen Umgebungsbildern 12, ausgewählt. Vorzugsweise ist das Referenzobjekt 34 ein lackiertes Bauteil und/oder ein lackiertes Anbaugerät 22 der landwirtschaftlichen Arbeitsmaschine 2, dessen genaue Farbe bekannt ist. Im vorliegenden Beispiel ist das Referenzobjekt 34 eine Haspel. Es wird bevorzugt jeweils ein Intensitätskorrekturwert für jeden Farbkanal des übergebenen Bildes 12 ermittelt und die Intensitäten 35 der Pixel 31 jedes Farbkanals werden einheitlich um den jeweiligen Intensitätskorrekturwert korrigiert. Die Korrektur erfolgt bevorzugt durch Subtraktion oder Addition des Intensitätskorrekturwerts. Jeder Intensitätskorrekturwert wird bevorzugt mittels Bestimmung einer Differenz der gemessenen jeweiligen Intensitäten 35 der dem jeweiligen Farbkanal zugeordneten Farbpixel eines Referenzobjekts 34 mit bekannter Farbe im übergebenen Bild 12 zu den bekannten jeweiligen Intensitäten 35 der dem jeweiligen Farbkanal zugeordneten Farbpixel eines Referenzobjekts 34 mit bekannter Farbe im übergebenen Bild 12 ermittelt. Die gemessenen jeweiligen Intensitäten 35 werden dabei insbesondere aus einer Auswahl von Farbpixel des Referenzobjekts 34 mit bekannter Farbe und durch Bildung eines Mittelwerts aus ihnen ermittelt. Der Mittelwert ist dabei vorzugsweise ein Median. Weitere Normierungen, wie zum Beispiel eine Korrektur von Objektivverzerrungen oder eine Signalanpassung verschiedener Bildsensortypen, liegen im Rahmen der Erfindung.

Bei der Vorverarbeitung des ersten Schrittes S1 kann der ausgewählte Auswertebereich 29 jeweils einen Ausschnitt der übergebenen Umgebungsbilder 12, vorzugsweise das Vorfeld 9, umfassen. Bevorzugt erstreckt sich eine Länge des Auswertebereichs 29 in Fahrtrichtung 11 bis zu einer Entfernung von weniger als 20 Metern vom optischen Sensor 3. Besonders bevorzugt erstreckt sich die Länge des Auswertebereichs 29 in Fahrtrichtung 11 bis zu einer Entfernung von sechs Metern vom optischen Sensor 3. Der Auswertebereich 29 erstreckt sich zudem bevorzugt mindestens über eine Breite eines Anbaugerätes 22 der landwirtschaftlichen Arbeitsmaschine 2. Die mögliche Länge und die Breite des Auswertebereichs 29 sind im Wesentlichen von der Rechenleistung der Bildanalyseeinheit 17 und einer Fahrzeuggeschwindigkeit der landwirtschaftlichen Arbeitsmaschine 2 abhängig.

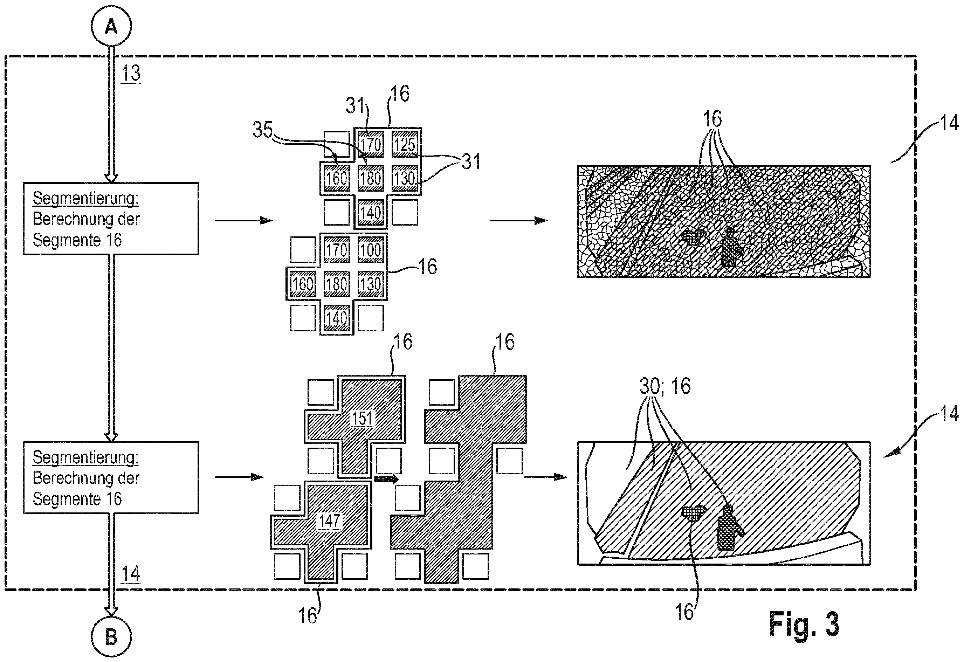

Fig. 3 zeigt eine schematische Darstellung eines weiteren Schrittes S2 des Bildverarbeitungssystems 1. In dem weiteren Schritt S2 werden die vorverarbeiteten Umgebungsbilder 13 in Segmente 16 mit Pixeln 31 gleicher und/oder ähnlicher Farbe und/oder Intensität 35 segmentiert. Dafür wird ein mathematisches Segmentierverfahren verwendet. Insbesondere wird ein Superpixel-Verfahren verwendet. Bevorzugt wird ein SEED-Superpixel-Verfahren verwendet. Nach Anwendung des Segmentierverfahrens entstehen segmentierte Umgebungsbilder 14. Ränder der Objekte 30 werden dann vorzugsweise von Teilen der Ränder der Segmente 16 abgebildet. In den Segmenten 16 sind bevorzugt benachbarte Pixel 31 gleicher und/oder ähnlicher Farbe und/oder Intensität 35 zusammengefasst. Die Segmente 16 entsprechen vorzugsweise Superpixeln. Das SEED-Superpixel-Verfahren ist ein Superpixelverfahren. Die Superpixelverfahren gehören zur Gruppe der Region-basierten Verfahren der Segmentierverfahren. Beim Superpixelverfahren wachsen Superpixel ausgehend von jeweils einem initialen Saatpunkt, indem Pixel 31 gleicher und/oder ähnlicher Farbe und/oder Intensität 35 zu einem Superpixel zusammengeführt werden. Stoßen Ränder von Superpixeln aneinander, wird jeweils ein neuer Saatpunkt für diese Superpixel gewählt, der einem neuen Formschwerpunkt des jeweiligen Superpixels entspricht und diese Superpixel wachsen von neuem ausgehend von dem jeweiligen neuen Saatpunkt an. Es entstehen homogene Superpixel, die die Ränder der Objekte 30 zuverlässig nachbilden. Beim SEED-Superpixel-Verfahren wird hingegen das vollständige, erneute Anwachsen der Superpixel vermieden und lediglich die Ränder der Superpixel werden verschoben. Dadurch ist das Verfahren bei gleichzeitig hoher Präzision schneller als die bisherigen Superpixelverfahren oder Segmentierverfahren. Es liegt jedoch im Rahmen der Erfindung, andere Superpixel-Verfahren anzuwenden, wie zum Beispiel ein SLIC-Superpixel-Verfahren. Alternativ zu dem Superpixel-Segmentierverfahren lassen sich auch andere Region-based-Verfahren, wie zum Beispiel ein Region-Growing-Verfahren, zum Segmentieren verwenden. Weiterhin lassen sich alternativ zu einem Region-based-Verfahren auch Schwellwert-Segmentierverfahren, kantenbasierte Segmentierverfahren oder hybride Segmentierverfahren anwenden.

In dem weiteren Schritt werden zudem optional die Segmente 16 zu größeren Segmenten 16 zusammengefasst und die Redundanz der Segmente 16 in den segmentierten Umgebungsbildern 14 dadurch reduziert. Dazu werden bevorzugt die Intensitäten 35, die Farbe und/oder die Grauwerte der Pixel 31 jedes Segments 16 der segmentierten Umgebungsbilder 14 jeweils zusammengefasst, sodass jedes Segment 16 einheitliche Intensitäten 35, eine einheitlichen Farbe und/oder einen einheitlichen Grauwert aufweist. Angrenzende Segmente 16 mit gleichen oder ähnlichen Intensitäten 35, Farben und/oder Grauwerten werden dann zu größeren Segmenten 16 zusammengefasst. Dadurch wird vorzugsweise jedes Objekt 30 in den segmentierten Umgebungsbildern 14 von jeweils einem Segment 16 umschlossen. Ränder der Segmente 16 entsprechen dann vorzugsweise den Rändern der Objekte 30. Es liegt auch im Rahmen der Erfindung die Segmenten 16 nicht zusammenzuführen, da die Segmentierung mittels des Segmentierverfahrens für eine Durchführung des nächsten Schrittes bereits ausreichend ist.

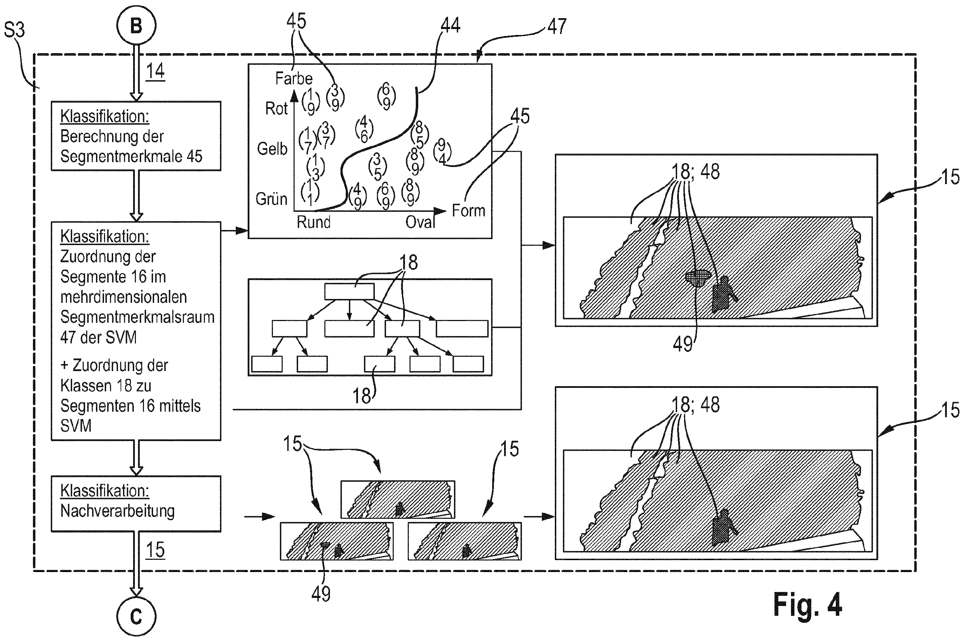

Fig. 4 zeigt eine schematische Darstellung eines nächsten Schrittes S3 des Bildverarbeitungssystems 1. In dem nächsten Schritt S3 werden die Segmente 16 klassifiziert. Dazu wird aus jedem Segment 16 jeweils mindestens ein Segmentmerkmal 45 berechnet. Die Segmentmerkmale 45 werden dazu aus den jeweiligen Intensitäten 35 der Pixel 31 des jeweiligen Segments 16, und/oder aus den Grauwerten der Pixel 31 des jeweiligen Segments 16 berechnet.

Die Segmentmerkmale 45 umfassen bevorzugt eine kleinste Intensität 35 des jeweiligen Segments 16, eine größte Intensität 35 des jeweiligen Segments 16, eine Differenz aus der größten und der kleinsten Intensität 35 des jeweiligen Segments 16, ein Histogramm des jeweiligen Segments 16, einen horizontalen Intensitätsgradienten des jeweiligen Segments 16, einen vertikalen Intensitätsgradienten des jeweiligen Segments 16, ein Histogramm des vertikalen und/oder des horizontalen Intensitätsgradienten des jeweiligen Segments 16, und/oder mindestens einen Intensitätsmittelwert des jeweiligen Segments 16, insbesondere ein arithmetischen Intensitätsmittelwert und/oder ein Intensitätsmedian des jeweiligen Segments 16. Andere Mittelwerte als Segmentmerkmal 45 sind ebenfalls denkbar, wie zum Beispiel ein geometrischer, harmonischer, quadratischer und/oder kubischer Mittelwert, und /oder gewichtete Mittelwerte.

Des Weiteren umfassen die Segmentmerkmale 45 vorzugsweise eine Auswahl an Segmentmerkmalen 45, die aus einer Grauwertematrix des jeweiligen Segments 16 berechnet werden, wobei die Grauwertematrix eine Häufigkeit einer Paarung der Intensitätsbereiche und/oder der Grauwertbereiche zweier benachbarter Pixel 31 des jeweiligen Segments 16 aufweist. Jeder Intensitätsbereich und/oder Grauwertebereich gibt jeweils einen Bereich zwischen zwei Intensitäten 35 und/oder Grauwerten wieder. Jeder Intensitätsbereich und/oder Grauwertebereich ist zudem gleich groß und deckt zusammen mit den anderen Intensitätsbereichen und/oder Grauwertebereichen einen Wertebereich zwischen der kleinsten und der größten Intensität 35 und/oder de Grauwert in einem Segment 16 ab. Insbesondere umfassen die Segmentmerkmale 45 eine Homogenität, eine Energie, eine Korrelation und/oder ein Kontrast der Grauwertematrix. Dabei ist die Homogenität ein Maß ein Maß für eine Ähnlichkeit der Intensitätsbereiche und/oder die Grauwertbereiche der benachbarten Pixeln 31. Die Energie ist ein Maß für eine zahlenmäßige Konzentrierung bestimmter Paarungen zweier Intensitätsbereiche und/oder Grauwertbereiche in einem Segment 16. Die Korrelation ist ein Maß für eine Häufigkeit eines statistischen Zusammenhangs bestimmter Paarungen von Intensitätsbereichen und/oder Grauwertbereichen mittels Bestimmung von Varianzen. Dabei zeigt eine kleine Varianz einen statistischen Zusammenhang auf. Der Kontrast ist ein Maß für eine Häufigkeit stark verschiedener Paarungen von den Intensitätsbereichen und/oder den Grauwertbereichen in einem Segment 16.

Des Weiteren umfassen die Segmentmerkmale 45 vorzugsweise eine vertikale Position im segmentierten Bild 14 und/oder einen Formschwerpunkt des Segments 16. Die vertikale Position im segmentierten Bild 14 bezieht sich hier auf Pixelkoordinaten des Segments 16 im zweidimensionalen segmentierten Bild 14. Der Formschwerpunkt des Segments 16 ist angelehnt an einen physikalischen Massenmittelpunkt. Weitere Segmentmerkmale 45 sind denkbar.

In dem nächsten Schritt S3 wird mittels einer Support Vector Machine, wobei die Support Vector Machine ein mathematisches Verfahren zum Klassifizieren von Segmenten 16 ist, jedes Segment 16 mittels des mindestens einen berechneten Segmentmerkmals 45 in eine Klasse 18 klassifiziert. Es werden dabei klassifizierte Umgebungsbilder 15 mit klassifizierten Segmenten 48 erzeugt. Die Support Vector Machine ist ein lernfähiges mathematisches Verfahren, insbesondere ein mathematisches Modell, zur automatischen Klassifizierung von Segmenten 16 und Bildung von Klassengrenzen 44. Die dabei gebildeten Klassengrenzen 44 haben einen möglichst weiten Abstand zu allen anderen Segmenten 16. Vorzugsweise wird eine Support Vector Machine mit einer einer-gegen-alle-Kodierung verwendet. Bei der einer-gegen-alle-Kodierung werden einem Segment 16 mehrere mögliche Klassen 18 mit unterschiedlichen Wahrscheinlichkeiten für eine richtige Zuordnung zugeordnet. Ausgegeben wird jedoch die wahrscheinlichste Klasse 18. Somit lassen sich bei einer eventuellen späteren Zusammenführung mit anderen weiterverarbeitbaren Bilddatensätzen 20, insbesondere anderer optischer Sensoren 3, die Wahrscheinlichkeit der Klassenzuordnungen mehrerer weiterverarbeitbaren Bilddatensätzen 20 miteinander verrechnen. Es liegt jedoch im Rahmen der Erfindung, andere Algorithmen für die Support Vector Machine, wie zum Beispiel einen Gaußkernel-Funktion, zu verwenden.

Die Support Vector Machine ordnet jedem Segment 16 basierend auf dem mindestens einen berechneten Segmentmerkmal 45, vorzugsweise eindeutig, eine Klasse 18 zu. Dazu ordnet sie die Segmente 16 in Teilbereiche eines mehrdimensionalen Segmentmerkmalsraums 47 ein. Dabei können unterschiedliche Segmentmerkmale 45 kombiniert werden. Aus den segmentierten Umgebungsbildern 14 werden somit klassifizierte Umgebungsbilder 15 mit klassifizierten Segmenten 48 gebildet.

Bevorzugt wird die Support Vector Machine vor Ihrem Einsatz trainiert. Beim Trainieren der Support Vector Machine werden den Segmenten 16 von segmentierten Umgebungsbildern 14 zuvor, vorzugsweise einmalig ab Werk, manuell Klassen 18 zugewiesen. Optional ist auch ein nachträgliches Trainieren der Support Vector Machine möglich, vorzugsweise auch während eines Erntebetriebes. Bevorzugt werden den Objekten 30 dabei auf einfache haptisch-visuelle Weise, zum Beispiel mittels eines Touchscreens, Klassen 18 zugewiesen.

Bevorzugt ist jeder Klasse 18 mindestens ein Segmentmerkmal 45 zugeordnet. Vorzugsweise sind den Klassen Kombinationen von Segmentmerkmalen 45 zugeordnet. So dient jeweils ein einziges Segmentmerkmal 45 und/oder eine Kombination an Segmentmerkmalen 45 zur, vorzugsweisen eindeutigen, Zuordnung der jeweiligen Klasse 18 zu jedem Segment 16. Mittels der Support Vector Machine sind für jede Klasse 18 des Weiteren Werte, Grenzwerte und/oder Wertebereiche für jedes Segmentmerkmal 45 zur Zuordnung festgelegt.

Des Weiteren wird vorzugsweise vorab eine Klassifikationsgüte der Segmentmerkmale 45 für die jeweiligen Klassen 18 bestimmt und zur Auswahl der geeignetsten Segmentmerkmale 45 für die Support Vector Machine verwendet. Die Klassifikationsgüte ist ein Maß für die Eignung eines Segmentmerkmals 45 für eine eindeutige Klassenzuordnung. Ist die Klassifikationsgüte eines Segmentmerkmals 45 für eine bestimmte Klasse 18 zu niedrig, wird dieses Segmentmerkmal 45 bevorzugt nicht zur Zuordnung dieser Klasse 18 verwendet. Die Klassifikationsgüte wird vorzugsweise mittels statistischer und/oder empirischer Tests, insbesondere mittels einer Kreuzvalidierung, einer Konfusionsmatrix und/oder einer Receiver-Operating-Characteristic-Kurve, geprüft. Weitere Tests zur Bestimmung der Klassifikationsgüte sind denkbar.

Vorzugsweise verwendet die Support Vector Machine Segmentmerkmale 45 mit einer hohen Klassifikationsgüte, insbesondere mit der höchsten Klassifikationsgüte, zur Klassifizierung der Segmente 16. Dadurch werden die Segmente 16 vorzugsweise eindeutig und zuverlässig klassifiziert.

Des Weiteren werden vorzugsweise die Wahrscheinlichkeiten, insbesondere A-Posteriori-Wahrscheinlichkeiten, für eine richtige Klassifizierung für jedes Segmentmerkmal 45 und/oder Segment 16 berechnet und vorzugsweise für jede Klassifizierung angegeben.

In dem nächsten Schritt S3 werden vorzugsweise nach der Klassifizierung der Segmente 16 die Klassifizierungen nachverarbeitet. Dabei werden falsche Klassifizierungen 49 und/oder Klassifizierungen mit berechneten niedrigen Wahrscheinlichkeiten gelöscht. Zur Identifizierung falscher Klassifizierungen 49 werden vorzugsweise mehrere direkt aufeinanderfolgende klassifizierte Umgebungsbilder 15 mit klassifizierten Segmenten 48 verglichen, und Klassifizierungen von Segmenten 16, die nur in einem einzelnen klassifizierten Bild 15 vorhanden sind, als falsch gewertet.

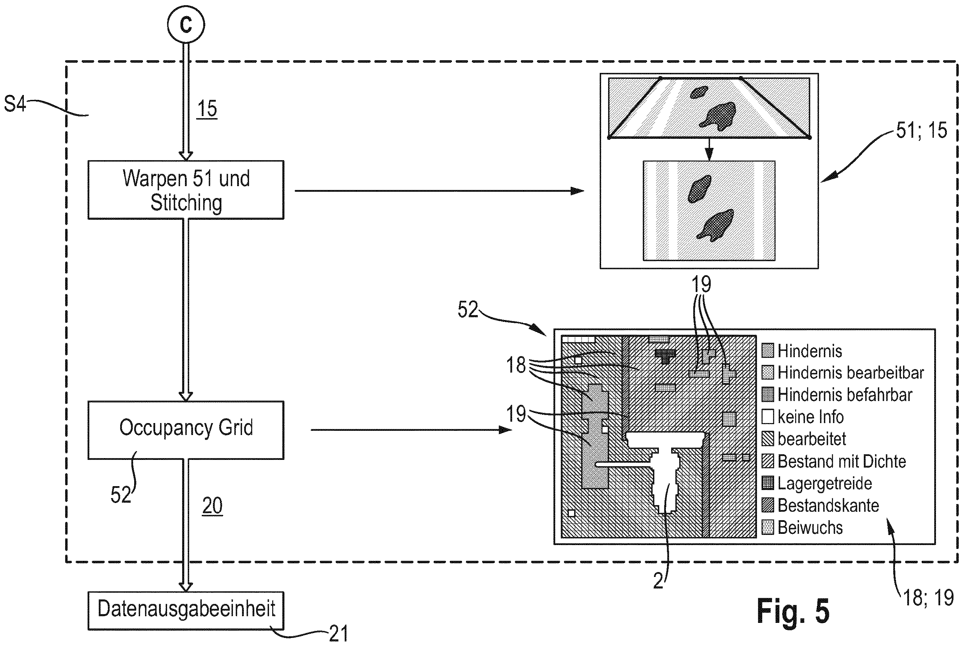

Fig. 5 zeigt eine schematische Darstellung des folgenden Schrittes S4 des Bildverarbeitungssystems 1. Im folgenden Schritt S4 generiert das Bildverarbeitungssystem 1, aus den klassifizierte Umgebungsbildern 15 mit den klassifizierten Segmenten 48 mittels Warpen 51, Stitching und/oder eines Übertrags in ein Occupancy Grid 52, einen weiterverarbeitbaren Bilddatensatz 20. Beim Warpen 51 wird eine Perspektive transformiert. Dabei wird insbesondere eine Perspektive entsprechend einer Kameraausrichtung in eine Vogelperspektive geändert. Beim Stitching werden Umgebungsbilder 7,15, insbesondere mehrerer optischer Sensoren 3, insbesondere Kameras 4, die räumlich und/oder zeitlich miteinander verknüpft sind, zu einem Bild 7,15 fusioniert (nicht dargestellt). Dadurch entsteht ein größeres Bild 7,15 mit einer größeren Abdeckung der Umgebung 8. Es liegt im Rahmen der Erfindung, das Stitching an anderer Stelle des Verfahrens durchzuführen. Der Übertrag in das Occupancy Grid 52 bewirkt eine räumliche Zuordnung von klassifizierten Segmenten 48 und/oder identifizierten Anomalien 19. Diese Darstellung stellt die räumlichen Entfernungen der einzelnen klassifizierten Segmente 48 und/oder identifizierten Anomalien 19 zueinander und zur landwirtschaftlichen Arbeitsmaschine 2 dar.

Bevorzugt wird der weiterverarbeitbare Bilddatensatz 20 mit Datensätzen anderer Sensoren, insbesondere optischer Sensoren 3, zusammengeführt und zu einem weiteren weiterverarbeitbaren Bilddatensatz 20 weiterverarbeitet. Anstelle des weiterverarbeitbaren Bilddatensatz 20 wird dann im Folgenden bevorzugt der weitere weiterverarbeitbare Bilddatensatz 20 verwendet. So kann der weitere weiterverarbeitbare Bilddatensatz 20 ebenfalls visuell dargestellt und/oder an andere Systeme der landwirtschaftlichen Arbeitsmaschine 2 übertragen werden. Andere optische Sensoren 3 sind insbesondere der Radarsensor 5 und/oder der Laserscanner 6.

Vorzugsweise ist die Datenausgabeeinheit 21 dazu eingerichtet, mindestens einen der weiterverarbeitbaren Bilddatensätze 20 anderen Systemen einer landwirtschaftlichen Arbeitsmaschine 2, insbesondere einer Regel- und Steuereinheit, zur Verfügung zu stellen. Vorzugsweise ist die Datenausgabeeinheit 21 als eine Schnittstelle ausgebildet. Weiterhin bevorzugt ist die Datenausgabeeinheit über einen CAN-Bus, ISO-Bus, oder anderen Datenübertragungssystemen, wie zum Beispiel Bluetooth oder WLAN, mit einem oder mehreren Systemen der landwirtschaftlichen Arbeitsmaschine 2 verbunden. Vorzugsweise ist die Datenausgabeeinheit 21 mit der Regel- und Steuereinheit 23 und/oder mit der Anzeigeeinheit verbunden.

Bevorzugt ist mindestens einer der weiterverarbeitbaren Bilddatensätze 20 von der landwirtschaftlichen Arbeitsmaschine 2 zur Umfelderkennung, insbesondere zur Identifizierung von Anomalien 19 im Vorfeld 9, verwendbar. Indem den Klassen 18 zuvor die Anomalien 19 zugeordnet sind, werden vorzugsweise mit der Klassifizierung gleichzeitig die Anomalien 19 erfasst und insbesondere automatisch identifiziert werden. Vorzugsweise wird ein Teil oder die gesamte Umgebung 8, insbesondere das Vorfeld 9, auf einem Display der landwirtschaftlichen Arbeitsmaschine 2 dargestellt. Die Darstellung kann bevorzugt als eingefärbtes Bild 7 der Kamera 4 und/oder bevorzugt als schematische Sicht von oben, insbesondere als Occupancy Grid 52, dargestellt sein, wobei die Anomalien 19 ebenfalls eingefärbt sind. Die Einfärbung erfolgt nach Klassen 18 und/oder Anomalien 19, sodass die Klassen 18 und/oder Anomalien 19 auf einfache Weise unterscheidbar sind.

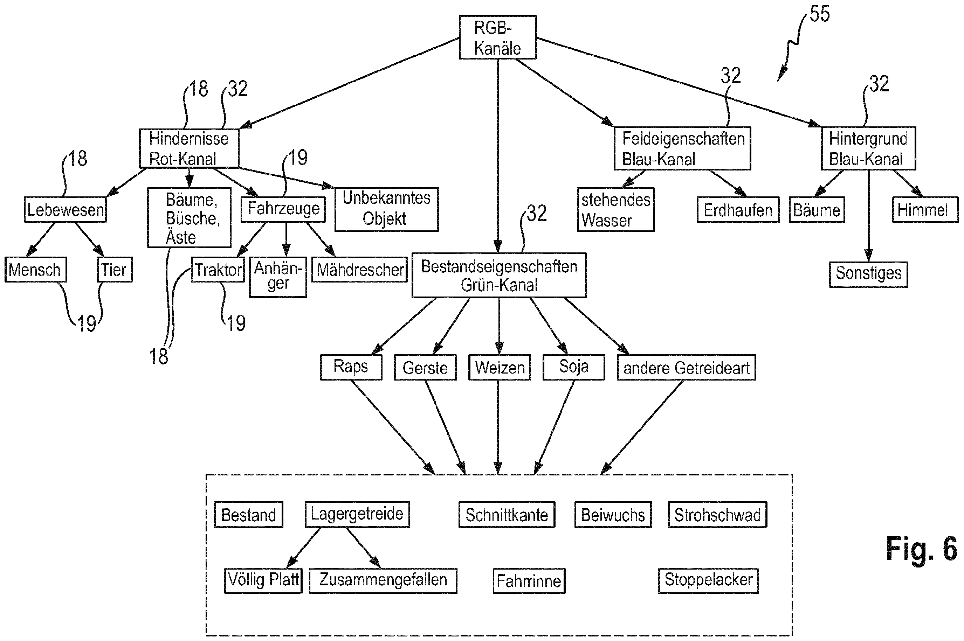

Fig. 6 zeigt eine beispielhafte schematische Einteilung von Klassen 18. Es liegt im Rahmen der Erfindung eine andere Einteilung der Klassen 18 vorzunehmen. Die Klassen 18 sind vorzugsweise in einer Klassengliederung 55 strukturiert. Sie weist mehrere Gliederungsebenen auf. Vorzugsweise weisen die Klassen Himmel, verschiedene Getreidearten wie zum Beispiel Raps und/oder Weizen, Bestandsdichten, verschiedene Anomalien 19 und weiteres auf. Bevorzugt sind die Klassen 18, die zugeordneten Segmentmerkmale 45 und/oder die Klassengliederung 55 in einer Datenbank gespeichert, auf die das Bildverarbeitungssystem 1, insbesondere die Support Vector Machine, für die Klassifizierung zugreift. Des Weiteren sind den Klassen 18 die Anomalien 19 zugeordnet. Insbesondere sind sie aufgrund ihrer Form, Größe, Struktur, Materialen, Bestandteilen, Position, Helligkeit, Farbe und/oder einem erforderlichem Steuerungsverhalten der landwirtschaftliche Arbeitsmaschine 2 und/oder ihrer Arbeitsorgane den Klassen 18 zugeordnet. Eine Anzahl an Klassen 18 und/oder Anomalien 19 ist vorzugsweise erweiterbar.

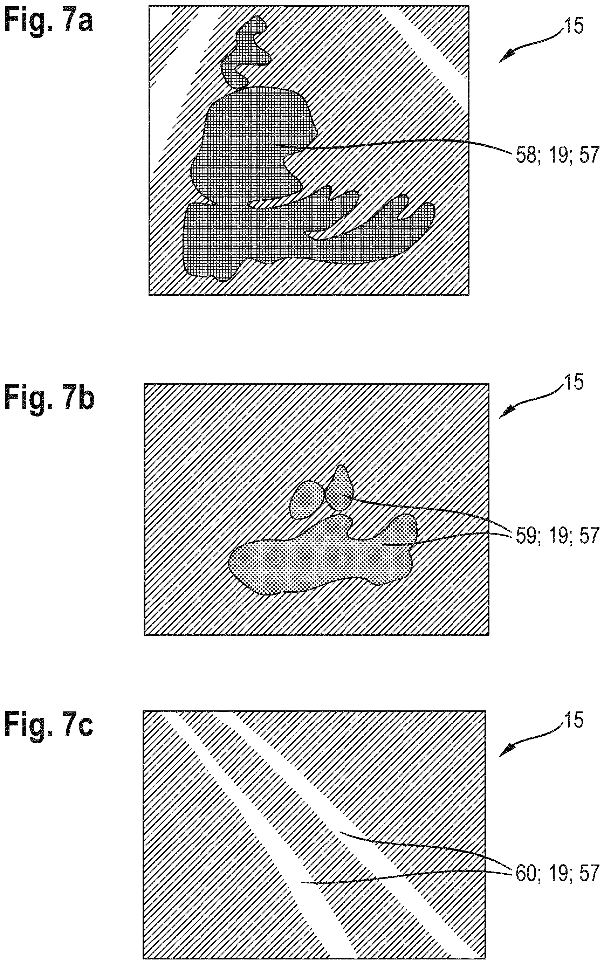

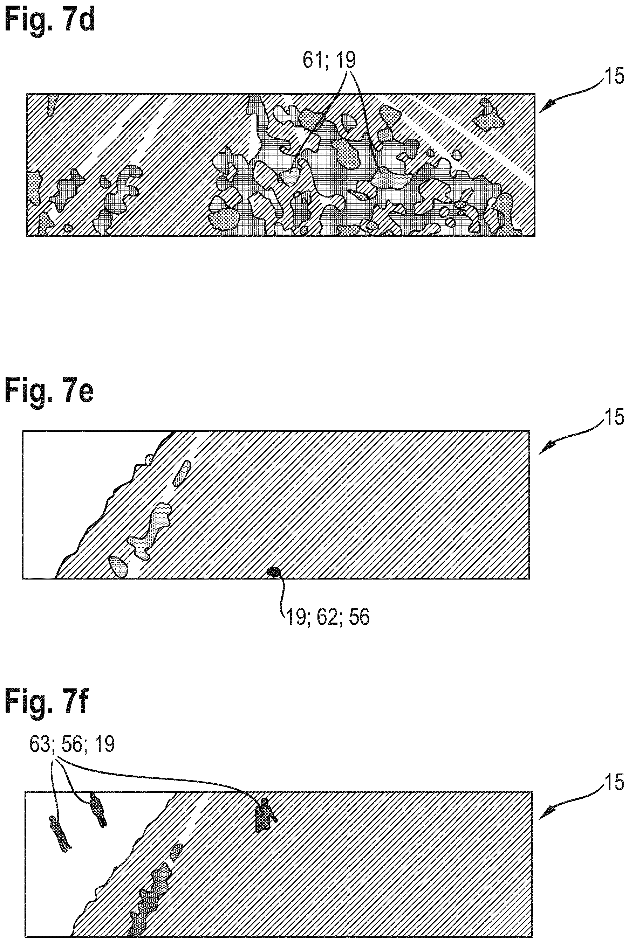

Fig. 7 zeigt eine schematische Darstellung von Anwendungen des Bildverarbeitungssystems 1 zur Identifikation von beispielhaft ausgewählten Anomalien 19. Anomalien 19 sind

Objekte 30 in der Umgebung 8, die direkten Einfluss auf den Betrieb der landwirtschaftlichen Erntemaschine 2 haben. In einer bevorzugten Ausgestaltung umfassen die Anomalien 19 Hindernisse 56 und/oder Unregelmäßigkeiten im dem Erntebestand 57. Des Weiteren umfassen sie vorzugsweise auch Bestand und Stoppelfeld. Unregelmäßigkeiten im dem Erntebestand 57 umfassen im Wesentlichen flächige Änderungen von Höhe und/oder Ausrichtung von Pflanzen des Erntebestandes und/oder Änderungen der Farbe und/oder Form der Pflanzen. Insbesondere umfassen Unregelmäßigkeiten im dem Erntebestand 57 Lagergetreide 58 (Fig. 7a), Bestandslücken 59 (Fig. 7b), Fahrspuren 60 (Fig. 7c), Beiwuchs 61 (Fig. 7d) und/oder Bestandskanten (nicht dargestellt).

Hindernisse 56 umfassen insbesondere Objekte 30, mit denen die landwirtschaftliche Arbeitsmaschine 2, insbesondere Ihre Anbaugeräte 22, kollidieren könnte und dadurch die landwirtschaftlichen Arbeitsmaschine 2, das Anbaugerät 22 und/oder ihre Arbeitsorgane beschädigt werden könnten. Sie umfassen auch unbekannte Objekte.

Unbekannte Objekte umfassen sämtliche Objekte 30, für die die Support Vector Machine keine der vorhandenen Klassen eindeutig, das heißt mit einer ausreichend hohen Wahrscheinlichkeit, zuordnen konnte. Insbesondere zählen hierzu unbekannte Hindernisse 56, auf die die Support Vector Machine nicht trainiert ist. Zudem umfassen Hindernisse 56 vorzugsweise Tiere und Menschen, die bei Kollision Verletzungen an den Tieren und/oder Menschen hervorrufen würden und des Weiteren bereits geerntetes Erntegut kontaminieren würden. Des Weiteren umfassen Hindernisse 56 bevorzugt Fahrzeuge oder Vorrichtungen, mit denen die landwirtschaftliche Arbeitsmaschine 2 im Rahmen des Ernteprozesses interagiert, so zum Beispiel ein Transportfahrzeug beim Überladen von Erntegut auf dieses. Die Hindernisse 56 umfassen kleine, mittelgroße und/oder große Hindernisse 56. Bevorzugt gliedern sich die Hindernisse 56 in niedrige Hindernisse 62 und/oder hohe Hindernisse 63, wobei niedrige Hindernisse 62 insbesondere durch Hebung des Anbaugerätes 22 ohne Beschädigung der landwirtschaftlichen Arbeitsmaschine 2 passiert werden können und hohe Hindernisse 63 insbesondere ein Ausweichen oder Stoppen der landwirtschaftlichen Arbeitsmaschine 2 erfordern. Niedrige Hindernisse 62 umfassen zum Beispiel Autoreifen, niedrige Felsen, Erdhaufen, und/oder Kleintiere, wie zum Beispiel Hasen. Hohe Hindernisse 63 umfassen hingegen zum Beispiel Bäume, große Felsen, Gewässer, Menschen, größere Tiere, wie zum Beispiel Rehe, andere landwirtschaftliche Arbeitsmaschinen 2 und/oder Masten. Weitere Hindernisse 56 sind hier ebenfalls denkbar. Zur Erfassung der Anomalien 19 wird die Support Vector Machine vorzugsweise mit den entsprechenden Anomalien 19 zuvor, insbesondere ab Werk, trainiert. Die identifizierten Anomalien 19 werden vorzugsweise dem Fahrzeugführer, insbesondere farblich unterscheidbar, angezeigt und/oder zur Steuerung der Arbeitsorgane der landwirtschaftlichen Arbeitsmaschine 2 verwendet.

Bei der bevorzugten farblichen unterscheidbaren Anzeige der Anomalien 19 sind den Anomalien 19, vorzugsweise unabhängig von Ihrer Einteilung in die Klassen, Farben zugewiesen. Beispielsweise werden sämtliche hohe Hindernisse 63 in rot und sämtliche niedrigen Hindernisse 62 in orange dargestellt.

Bevorzugt werden die erfassten Objekte 30, insbesondere die identifizierten Anomalien 19, zur, vorzugsweise autonomen oder teilautonomen, Steuerung der landwirtschaftlichen Arbeitsmaschine 2, ihrer Anbaugeräte 22 und/oder ihrer Arbeitsorgane mittels der Regel-und Steuereinheit 23 verwendet. Dazu sendet die Regel-und Steuereinheit 23 Steuersignale an die jeweiligen Aktoren, insbesondere an die Hydraulikzylinder des Anbaugerätes 22, an die Lenkung und/oder an das Bremssystem. Alternativ oder zusätzlich kann dem Fahrzeugführer eine visuelle oder akustische Warnmeldung und/oder eine Anweisung zum Steuern angezeigt werden.

Die Regel-und Steuereinheit 23 ist vorzugsweise dazu eingerichtet, die landwirtschaftliche Arbeitsmaschine 2 in Abhängigkeit von den Anomalien 19, derart zu steuern, dass eine Beschädigung der landwirtschaftlichen Arbeitsmaschine 2, eine Verletzung von Lebewesen, eine Aufnahme von Pflanzen, die die Erntegutqualität des bereits geernteten Ernteguts mindern würden, vermieden und/oder ein Erntegutbestand effizient abgeerntet wird.

Des Weiteren ist die Regel-und Steuereinheit 23 vorzugsweise dazu eingerichtet, in Abhängigkeit von dem erfindungsgemäßen weiterverarbeitbaren Bilddatensatz 20 die landwirtschaftliche Arbeitsmaschine 2 bei einer Erfassung und einer Identifizierung von Lagergetreide 58 und/oder Beiwuchs 61 im Vorfeld 9 derart zu steuern, dass das mindestens eine Anbaugerät 22 vor dem Lagergetreide 58 und/oder dem Beiwuchs 61 angehoben wird. Alternativ ist die Regel-und Steuereinheit 23 vorzugsweise dazu eingerichtet, in Abhängigkeit von dem erfindungsgemäßen weiterverarbeitbaren Bilddatensatz 20 die landwirtschaftliche Arbeitsmaschine 2 bei einer Erfassung und einer Identifizierung von Lagergetreide 58 im Vorfeld 9 derart zu steuern, dass das mindestens eine Anbaugerät 22 vor dem Lagergetreide 58 abgesenkt wird. Zusätzlich kann die Regel-und Steuereinheit 23 dazu eingerichtet, die Haspel abzusenken, um die Aufnahme des Lagergetreides 58 zu verbessern.

Die Regel-und Steuereinheit 23 ist vorzugsweise weiterhin dazu eingerichtet, in Abhängigkeit von dem erfindungsgemäßen weiterverarbeitbaren Bilddatensatz 20 die landwirtschaftliche Arbeitsmaschine 2 bei einer Erfassung und einer Identifizierung von Hindernissen 56 im Vorfeld 9 derart zu steuern, dass die landwirtschaftliche Arbeitsmaschine 2 den Hindernissen 56 ausweicht. Dabei weicht sie niedrigen Hindernissen 62 vorzugsweise durch Hebung von Anbaugeräten 22, insbesondere eines Schneidwerks, aus. Hohen Hindernissen 63 weicht die landwirtschaftliche Arbeitsmaschine 2 vorzugsweise durch Stoppen der landwirtschaftlichen Arbeitsmaschine 2 und/oder Umfahren dieser aus.

Die Regel-und Steuereinheit 23 ist vorzugsweise weiterhin dazu eingerichtet, in Abhängigkeit von dem erfindungsgemäßen weiterverarbeitbaren Bilddatensatz 20 die landwirtschaftliche Arbeitsmaschine 2 bei einer Erfassung und einer Identifizierung von einem Vorgewende derart zu steuern, dass die landwirtschaftliche Arbeitsmaschine 2 am Vorgewende das mindestens eine Anbaugerät 22 anhebt.

Die Regel-und Steuereinheit 23 ist vorzugsweise weiterhin dazu eingerichtet, in Abhängigkeit von dem erfindungsgemäßen weiterverarbeitbaren Bilddatensatz 20 die landwirtschaftliche Arbeitsmaschine 2 bei einer Erfassung und einer Identifizierung von einer Fahrspur 60 derart zu steuern, dass sie in und/oder entlang der Fahrspur 60 fährt.

Die Regel-und Steuereinheit 23 ist vorzugsweise weiterhin dazu eingerichtet, in Abhängigkeit von dem erfindungsgemäßen weiterverarbeitbaren Bilddatensatz 20 die landwirtschaftliche Arbeitsmaschine 2 bei einer Erfassung und einer Identifizierung von einer Bestandskante derart zu steuern, dass die landwirtschaftliche Arbeitsmaschine 2 entlang der Bestandskante fährt.

Bevorzugt ist die Regel-und Steuereinheit 23 weiterhin dazu eingerichtet, die landwirtschaftliche Arbeitsmaschine 2 bei einer Erfassung und einer Identifizierung von Lebewesen im Vorfeld 9, derart zu steuern, dass die landwirtschaftliche Arbeitsmaschine 2 stoppt.

### Bezugszeichenliste

- 1: Bildverarbeitungssystem
- 2: Landwirtschaftliche Arbeitsmaschine
- 3: Bildgenerierungssystem
- 4: Kamera
- 5: Radarsensor
- 6: Laserscanner
- 7: Bild
- 8: Umgebung
- 9: Vorfeld
- 10: Bereich des Anbaugerätes
- 11: Fahrtrichtung
- 12: Übergebene Umgebungsbilder
- 13: Vorverarbeitete Umgebungsbilder
- 14: Segmentierte Umgebungsbilder
- 15: Klassifizierte Umgebungsbilder
- 16: Segmente
- 17: Bildanalyseeinheit
- 18: Klassen
- 19: Anomalien
- 20: Weiterverarbeitbarer Bilddatensatz
- 21: Datenausgabeeinheit
- 22: Anbaugerät
- 23: Regel- und Steuereinheit
- 27: Intensitätsnormierung
- 28: Farbnormierung
- 29: Auswertbereich
- 30: Objekt
- 31: Pixel
- 32: Bayer-Pixelmuster
- 33: Referenzbild
- 34: Referenzobjekt
- 35: Intensität
- 44: Klassengrenze
- 45: Segmentmerkmale
- 47: Mehrdimensionaler Segmentmerkmalsraum
- 48: Klassifiziertes Segment
- 49: Falsche Klassifizierung
- 51: Warpen
- 52: Occupancy Grid
- 55: Klassengliederung
- 56: Hindernis
- 57: Unregelmäßigkeiten im Erntebestand
- 58: Lagergetreide
- 59: Bestandslücken
- 60: Fahrspur
- 61: Beiwuchs
- 62: Niedriges Hindernis
- 63: Hohes Hindernis
- S1: Erster Schritt
- S2: Weitere Schritt
- S3: Nächster Schritt
- S4: Folgender Schritt

## Patentansprüche

1. Landwirtschaftliche Arbeitsmaschine (2) ein Bildverarbeitungssystem (1), eine Regel-und Steuereinheit (23), eine Datenausgabeeinheit (21) und zumindest ein Bildgenerierungssystem (3) umfassend,
wobei das Bildverarbeitungssystem eine Auswahl an den Umgebungsbildern (7) in einer Bildanalyseeinheit (17) verarbeitet, das Bildgenerierungssystem (3) dazu eingerichtet ist, Umgebungsbilder (7) zu generieren und die Umgebungsbilder (7) an das Bildverarbeitungssystem (1) zu übergeben,
**dadurch gekennzeichnet, dass** das Bildverarbeitungssystem (1) dazu eingerichtet ist,
in einem ersten Schritt (S1) die übergebenen Umgebungsbilder (12) vorzuverarbeiten, wobei in dem ersten Schritt (S1) das Vorverarbeiten der übergebenen Umgebungsbilder (12) durch mindestens eine Normierung der übergebenen Umgebungsbilder (12) erfolgt und mindestens eine Intensitätsnormierung (27), eine Farbnormierung (28) und eine Auswahl eines Auswertebereichs (29) in den übergebenen Umgebungsbildern (12) umfasst, und bei der Intensitätsnormierung (27) jeweils ein pixelspezifischer Intensitätskorrekturfaktor für jedes Pixel (7) mittels mindestens eines Referenzbildes (33) bestimmt wird, und die Intensität (35) jedes Pixels (31) der übergebenen Umgebungsbilder (12) mit dem jeweiligen pixelspezifischen Intensitätskorrekturfaktor korrigiert wird,
in einem weiteren Schritt (S2) die vorverarbeiteten Umgebungsbilder (13) zu segmentieren, wobei das Bildverarbeitungssystem (1) in dem weiteren Schritt (S2) die vorverarbeiteten Umgebungsbilder (13) in Segmente (16) mit Pixeln (31) gleicher oder ähnlicher Farbe oder Intensität (35) segmentiert,
in einem nächsten Schritt (S3) die entstehenden Segmente (16) zu klassifizieren, wobei das Bildverarbeitungssystem (1) in dem nächsten Schritt (S3) die Segmente (16) in der Weise klassifiziert, dass es zunächst aus jedem Segment (16) jeweils mindestens ein Segmentmerkmal (45) berechnet, wobei das mindestens eine Segmentmerkmal (45) aus den jeweiligen Intensitäten (35) der Pixel (31) des jeweiligen Segments (16) und/oder aus den Grauwerten der Pixel (31) des jeweiligen Segments (16) berechnet wird und mittels einer Support Vector Maschine, wobei die Support Vector Maschine ein mathematisches Verfahren zum Klassifizieren von Segmenten (16) ist, jedes Segment (16) mittels des mindestens einen berechneten Segmentmerkmals (45) in eine Klasse (18) klassifiziert und klassifizierte Umgebungsbilder (15) mit klassifizierten Segmenten (48) erzeugt werden,
wobei den Klassen (18) Anomalien (19) zugeordnet sind und die Anomalien (19) Objekte (30) in der Umgebung (8) der landwirtschaftlichen Arbeitsmaschine (2) sind, welche direkten Einfluss auf den Betrieb der landwirtschaftlichen Arbeitsmaschine (2) haben,
wobei jeder Klasse (18) mindestens ein Segmentmerkmal (45) zugeordnet ist, sodass klassifizierte Bilder (15) mit identifizierbaren Anomalien (19) geschaffen werden,
und in einem folgenden Schritt (S4) aus den klassifizierten Umgebungsbildern (15) mit den klassifizierten Segmenten (48) mittels Warpen (51), Stitching oder eines Übertrags in ein Occupancy Grid (52) einen weiterverarbeitbaren Bilddatensatz (20) zu generieren,
und die Regel- und Steuereinheit (23) dazu eingerichtet ist, die landwirtschaftliche Arbeitsmaschine anhand des weiterverarbeitbaren Bilddatensatzes (20) zu steuern.

2. Landwirtschaftliche Arbeitsmaschine (2) nach einem der vorhergehenden Ansprüche,
**dadurch gekennzeichnet, dass**
die landwirtschaftlichen Arbeitsmaschine (2) eine Anzeigeeinheit zur Visualisierung des weiterverarbeitbaren Bilddatensatzes (20) und der Anomalien (19) aufweist.

3. Landwirtschaftliche Arbeitsmaschine (2) nach Anspruch 1,
**dadurch gekennzeichnet, dass**
das Bildgenerierungssystem (3) zumindest einen optischen Sensor umfasst,
wobei der zumindest eine optische Sensor eine Kamera (4), einen Radarsensor (5) oder einen Laserscanner umfasst, wobei die Kamera (4) als eine Monochromkamera, eine Infrarotkamera oder eine Farbkamera ausgebildet ist.

4. Landwirtschaftliche Arbeitsmaschine (2) nach einem der vorhergehenden Ansprüche,
**dadurch gekennzeichnet, dass**
die landwirtschaftlichen Arbeitsmaschine (2) mindestens ein Anbaugerät (22), insbesondere ein Schneidwerk, aufweist.

5. Landwirtschaftliche Arbeitsmaschine (2) nach einem der vorhergehenden Ansprüche,
**dadurch gekennzeichnet, dass**
die Umgebungsbilder (7) eine Umgebung (8) der landwirtschaftlichen Arbeitsmaschine (2) erfassen, wobei die Umgebung (8) ein Umfeld, insbesondere ein Vorfeld (9), der landwirtschaftlichen Arbeitsmaschine (2) und/oder Bereiche der landwirtschaftlichen Arbeitsmaschine (2) selbst umfasst.

6. Landwirtschaftliche Arbeitsmaschine (2) nach einem der vorhergehenden Ansprüche,
**dadurch gekennzeichnet, dass**
in dem ersten Schritt (S1) bei der Farbnormierung (28) jeweils ein Intensitätskorrekturwert für jeden Farbkanal der übergebenen Umgebungsbilder (12) ermittelt wird und die Intensitäten (35) der Pixel (31) jedes Farbkanals einheitlich um den jeweiligen Intensitätskorrekturwert korrigiert wird, wobei jeder Intensitätskorrekturwert mittels Bestimmung einer Differenz der gemessenen jeweiligen Intensitäten (35) der dem jeweiligen Farbkanal zugeordneten Farbpixel eines Referenzobjekts (34) mit bekannter Farbe in den übergebenen Umgebungsbildern (12) zu den bekannten jeweiligen Intensitäten (35) der dem jeweiligen Farbkanal zugeordneten Farbpixel eines Referenzobjekts (34) mit bekannter Farbe in den übergebenen Umgebungsbildern (12) ermittelt wird, wobei die gemessenen jeweiligen Intensitäten (35) insbesondere aus einer Auswahl von Farbpixel des Referenzobjekts (34) mit bekannter Farbe und durch Umgebungsbildung eines Mittelwerts aus ihnen ermittelt werden.

7. Landwirtschaftliche Arbeitsmaschine (2) nach Anspruch einem der vorhergehenden Ansprüche,
**dadurch gekennzeichnet, dass**
die Auswahl des Auswertebereichs (29) der übergebenen Umgebungsbilder (12) jeweils einen Ausschnitt der übergebenen Umgebungsbilder (12) umfasst, wobei der Auswertebereich (29) sich insbesondere bis zu einer Entfernung von weniger als 20 Metern zum optischen Sensor (3), weiterhin insbesondere bis zu einer Entfernung von sechs Metern zum optischen Sensor (3), erstreckt.

8. Landwirtschaftliche Arbeitsmaschine (2) nach einem der vorhergehenden Ansprüche,
**dadurch gekennzeichnet, dass**
das Bildverarbeitungssystem (1) in dem weiteren Schritt (S2) die vorverarbeiteten Umgebungsbilder (13) i mittels eines Superpixel-Verfahrens, weiterhin insbesondere mittels eines SEED-Superpixel-Verfahrens segmentiert.

9. Landwirtschaftliche Arbeitsmaschine (2) nach einem der vorhergehenden Ansprüche,
**dadurch gekennzeichnet, dass**
das Bildverarbeitungssystem (1) in dem nächsten Schritt (S3) die Segmentmerkmale (45) eine kleinste Intensität des jeweiligen Segments (16), eine größte Intensität des jeweiligen Segments (16), eine Differenz aus der größten und der kleinsten Intensität (16) des jeweiligen Segments (16), ein Histogramm des jeweiligen Segments (16), einen horizontalen Intensitätsgradienten des jeweiligen Segments (16), einen vertikalen Intensitätsgradienten des jeweiligen Segments (16), ein Histogramm des vertikalen und/oder des horizontalen Intensitätsgradienten des jeweiligen Segments (16), und/oder mindestens einen Intensitätsmittelwert des jeweiligen Segments (16), insbesondere einen arithmetischen Intensitätsmittelwert und/oder einen Intensitätsmedian des jeweiligen Segments (16), umfassen.

10. Landwirtschaftliche Arbeitsmaschine (2) nach einem der vorhergehenden Ansprüche,
**dadurch gekennzeichnet, dass**
eine Auswahl an Segmentmerkmalen (16) aus einer Grauwertematrix des jeweiligen Segments (16) berechnet wird, insbesondere eine Homogenität, eine Energie, eine Korrelation und/oder ein Kontrast der Grauwertematrix, wobei die Grauwertematrix eine Häufigkeit einer Paarung der Intensitätsbereiche und/oder der Grauwertbereiche zweier benachbarter Pixel (31) des jeweiligen Segments (16) aufweist, und/oder die Segmentmerkmale (45) eine vertikale Position im segmentierten Umgebungsbild (14) und/oder einen Formschwerpunkt des Segments (16) umfassen.

11. Landwirtschaftliche Arbeitsmaschine (2) nach einem der vorhergehenden Ansprüche,
**dadurch gekennzeichnet, dass**
das Bildverarbeitungssystem (1) in dem nächsten Schritt (S3) mittels jeder Klasse (18) mindestens ein Segmentmerkmal (45) zugeordnet ist,
wobei vorab eine Klassifikationsgüte der Segmentmerkmale (45) für die jeweiligen Klassen (18) bestimmt und zur Auswahl der geeignetsten Segmentmerkmale (45) für die Support Vector Machine verwendet wird, und insbesondere die Support Vector Machine Segmentmerkmale (45) mit einer hohen Klassifikationsgüte, insbesondere mit der höchsten Klassifikationsgüte, zur Klassifizierung der Segmente (16) verwendet, und insbesondere die Wahrscheinlichkeiten für eine richtige Klassifizierung für jedes Segmentmerkmal (45) und/oder Segment (16) berechnet werden.

12. Landwirtschaftliche Arbeitsmaschine (2) nach einem der vorhergehenden Ansprüche,
**dadurch gekennzeichnet, dass**
der weiterverarbeitbare Bilddatensatz (20) mit Datensätzen anderer Sensoren, insbesondere optischer Sensoren (3), zusammengeführt und zu einem weiteren weiterverarbeitbaren Bilddatensatz (20) weiterverarbeitet wird.

13. Landwirtschaftliche Arbeitsmaschine (2) nach einem der vorhergehenden Ansprüche,
**dadurch gekennzeichnet, dass**
die Datenausgabeeinheit (21) dazu eingerichtet ist, mindestens einen der weiterverarbeitbaren Bilddatensätze (20) anderen Systemen einer landwirtschaftlichen Arbeitsmaschine (2), insbesondere der Regel- und Steuereinheit, zur Verfügung zu stellen.

14. Landwirtschaftliche Arbeitsmaschine (2) nach einem der vorhergehenden Ansprüche,
**dadurch gekennzeichnet, dass**
mindestens einer der weiterverarbeitbaren Bilddatensätze (20) von der landwirtschaftlichen Arbeitsmaschine (2) zur Umfelderkennung, insbesondere zur Identifizierung von Anomalien (19) im Vorfeld (9), verwendbar ist.

15. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, die landwirtschaftliche Arbeitsmaschine (2) in Abhängigkeit von den Anomalien (19) derart zu steuern, dass eine Beschädigung der landwirtschaftlichen Arbeitsmaschine (2), eine Verletzung von Lebewesen, eine Aufnahme von eine Erntegutqualität mindernden Pflanzen vermieden und/oder ein Erntegutbestand effizient abgeerntet wird.

16. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, in Abhängigkeit von dem weiterverarbeitbaren Bilddatensatz (20) die landwirtschaftliche Arbeitsmaschine (2) bei einer Erfassung und einer Identifizierung von Lagergetreide (58) und/oder Beiwuchs (61) im Vorfeld (9) derart zu steuern, dass das mindestens eine Anbaugerät (22) vor dem Lagergetreide (58) und/oder dem Beiwuchs (61) angehoben wird.

17. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, in Abhängigkeit von dem weiterverarbeitbaren Bilddatensatz (20) die landwirtschaftliche Arbeitsmaschine (2) bei einer Erfassung und einer Identifizierung von Lagergetreide (58) im Vorfeld (9) derart zu steuern, dass das mindestens eine Anbaugerät (22) vor dem Lagergetreide (58) abgesenkt.

18. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, in Abhängigkeit von dem weiterverarbeitbaren Bilddatensatz (20) die landwirtschaftliche Arbeitsmaschine (2) bei einer Erfassung und einer Identifizierung von Hindernissen (56) im Vorfeld (9) derart zu steuern, dass die landwirtschaftliche Arbeitsmaschine (2) den Hindernissen (56) ausweicht, insbesondere durch Hebung von Anbaugeräten (22) über niedrige Hindernisse (62), insbesondere durch Stoppen der landwirtschaftlichen Arbeitsmaschine (2) und/oder insbesondere durch Umfahren von hohen Hindernissen (63).

19. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, in Abhängigkeit von dem weiterverarbeitbaren Bilddatensatz (20) die landwirtschaftliche Arbeitsmaschine (2) bei einer Erfassung und einer Identifizierung von einem Vorgewende derart zu steuern, dass die landwirtschaftliche Arbeitsmaschine (2) am Vorgewende das mindestens eine Anbaugerät (22) anhebt.

20. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, in Abhängigkeit von dem weiterverarbeitbaren Bilddatensatz (20) die landwirtschaftliche Arbeitsmaschine (2) bei einer Erfassung und einer Identifizierung von einer Fahrspur (60) derart zu steuern, dass sie in oder entlang der Fahrspur (60) fährt.

21. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, in Abhängigkeit von dem weiterverarbeitbaren Bilddatensatz (20) die landwirtschaftliche Arbeitsmaschine (2) bei einer Erfassung und einer Identifizierung von einer Bestandskante derart zu steuern, dass die landwirtschaftliche Arbeitsmaschine (2) entlang der Bestandskante fährt.

22. Landwirtschaftliche Arbeitsmaschine (2) nach einem der vorhergehenden Ansprüche,
**dadurch gekennzeichnet, dass**
die Regel- und Steuereinheit (23) dazu eingerichtet ist, in Abhängigkeit von dem weiterverarbeitbaren Bilddatensatz (20) die landwirtschaftliche Arbeitsmaschine (2) bei einer Erfassung und einer Identifizierung von Lebewesen im Vorfeld (9) derart zu steuern, dass die landwirtschaftliche Arbeitsmaschine (2) stoppt.

## Claims

1. An agricultural working machine (2) comprising an image processing system (1), a regulating and control unit (23), a data output unit (21) and at least one image generating system (3), wherein the image processing system processes a selection of images of the surroundings (7) in an image analysis unit (17), wherein the image generating system (3) is configured so as to generate images of the surroundings (7) and to transfer the images of the surroundings (7) to the image processing system (1),
**characterized in that**
the image processing system (1) is configured:
in a first step (S1), to pre-process the transferred images of the surroundings (12), wherein in the first step (S1), preprocessing of the transferred images of the surroundings (12) is carried out by means of at least a normalization of the transferred images of the surroundings (12) and comprises at least an intensity normalization (27), a colour normalization (28) and a selection of a region of interest (29) in the transferred images of the surroundings (12), and in the case of intensity normalization (27), a respective pixel-specific intensity correction factor is determined for each pixel (7) by means of at least one reference image (33), and the intensity (35) of each pixel (31) of the transferred images of the surroundings (12) is corrected with the respective pixel-specific intensity correction factor,
in a further step (S2), to segment the pre-processed images of the surroundings (13), wherein in the further step (S2), the image processing system (1) segments the pre-processed images of the surroundings (13) into segments (16) with pixels (31) of identical or similar colour or intensity (35),
in a next step (S3), to classify the segments (16) which are formed, wherein in the next step (S3), the image processing system (1) classifies the segments (16) in such a way that it initially computes at least one segment feature (45) from each respective segment (16), wherein the at least one segment feature (45) is computed from the respective intensities (35) of the pixels (31) of the respective segment (16) and/or from the grey levels of the pixels (31) of the respective segment (16) and, with the aid of a support vector machine, wherein the support vector machine is a mathematical method for classifying segments (16), classifies each segment (16) into a class (18) with the aid of the at least one computed segment feature (45) and classified images of the surroundings (15) with classified segments (48) are produced, wherein anomalies (19) are assigned to the classes (18) and the anomalies (19) are objects (30) in the surroundings (8) of the agricultural working machine (2) which have a direct influence on the operation of the agricultural working machine (2),
wherein at least one segment feature (45) is associated with each class (18), so that classified images (15) with identifiable anomalies (19) are generated,
and in a subsequent step (S4), to generate an image data set (20) which is suitable for further processing from the classified images of the surroundings (15) with the classified segments (48) by means of warping (51), stitching or a conversion into an occupancy grid (52),
and the regulating and control unit (23) is configured to control the agricultural working machine with the aid of the image data set (20) which is suitable for further processing.

2. The agricultural working machine (2) according to one of the preceding claims,
**characterized in that**
the agricultural working machine (2) has a display unit for visualising the image data set (20) which is suitable for further processing and the anomalies (19).

3. The agricultural working machine (2) according to claim 1, **characterized in that**
the image generating system (3) comprises at least one optical sensor, wherein the at least one optical sensor comprises a camera (4), a radar sensor (5) or a laser scanner, wherein the camera (4) is configured as a monochromatic camera, an infrared camera or a colour camera.

4. The agricultural working machine (2) according to one of the preceding claims,
**characterized in that**
the agricultural working machine (2) has at least one attachment (22), in particular a cutting assembly.

5. The agricultural working machine (2) according to one of the preceding claims,
**characterized in that**
the images of the surroundings (7) capture surroundings (8) of the agricultural working machine (2), wherein the surroundings (8) include a surrounding area, in particular a frontal area (9), of the agricultural working machine (2) and/or regions of the agricultural working machine (2) itself.

6. The agricultural working machine (2) according to one of the preceding claims,
**characterized in that**
in the first step (S1), during the colour normalization (28), a respective intensity correction value is determined for each colour channel of the transferred images of the surroundings (12), and the intensities (35) of the pixels (31) for each colour channel are uniformly corrected by the respective intensity correction value, wherein each intensity correction value is determined by means of determining a difference between the respective measured intensities (35) of the colour pixels associated with the respective colour channel of a reference object (34) with a known colour in the transferred images of the surroundings (12) and the respective known intensities (35) of the colour pixels associated with the respective colour channel of a reference object (34) with a known colour in the transferred images of the surroundings (12) , wherein the respective measured intensities (35) are in particular determined from a selection of colour pixels from the reference object (34) with a known colour and by the formation of a mean value therefrom.

7. The agricultural working machine (2) as claimed in one of the preceding claims,
**characterized in that**
the selection of the region of interest (29) of the transferred images of the surroundings (12) respectively comprises a section of the transferred images of the surroundings (12), wherein the region of interest (29) in particular extends to a distance of less than 20 metres from the optical sensor (3), more particularly to a distance of six metres from the optical sensor (3).

8. The agricultural working machine (2) according to one of the preceding claims,
**characterized in that**
in the further step (S2), the image processing system (1) segments the pre-processed images of the surroundings (13) by means of a superpixel method, more particularly by means of a SEED superpixel method.

9. The agricultural working machine (2) according to one of the preceding claims,
**characterized in that**
in the next step (S3), the image processing system (1), the segment features (45) comprise a lowest intensity of the respective segment (16), a highest intensity of the respective segment (16), a difference between the lowest and the highest intensity (16) of the respective segment (16), a histogram for the respective segment (16), a horizontal intensity gradient for the respective segment (16), a vertical intensity gradient for the respective segment (16), a histogram for the vertical and/or horizontal intensity gradients of the respective segment (16), and/or at least one mean intensity for the respective segment (16), in particular an arithmetic mean intensity and/or a median intensity for the respective segment (16).

10. The agricultural working machine (2) according to one of the preceding claims,
**characterized in that**
a selection of segment features (16) is computed from a grey level matrix of the respective segment (16), in particular a homogeneity, an energy, a correlation and/or a contrast of the grey level matrix, wherein the grey level matrix has a frequency for a pairing of the intensity regions and/or of the grey level regions for two adjacent pixels (31) of the respective segment (16), and/or the segment features (45) comprise a vertical position in the segmented images of the surroundings (14) and/or a centre of gravity of the segment (16).

11. The agricultural working machine (2) according to one of the preceding claims,
**characterized in that**
in the next step (S3), the image processing system (1) associates at least one segment feature (45) with each class (18), wherein firstly, a classification rating of the segment features (45) is determined for the respective classes (18) and the support vector machine is used for the selection of the most suitable segment features (45), and in particular, the support vector machine uses segment features (45) with a high classification rating, in particular with the highest classification rating, for the classification of the segments (16), and in particular the probabilities for a correct classification are computed for each segment feature (45) and/or segment (16).

12. The agricultural working machine (2) according to one of the preceding claims,
**characterized in that**
the image data set (20) which is suitable for further processing is merged with data sets from other sensors, in particular optical sensors (3), and is processed further to form a further image data set (20).

13. The agricultural working machine (2) according to one of the preceding claims,
**characterized in that**
the data output unit (21) is configured such that at least one of the image data sets (20) which is suitable for further processing is made available to other systems of an agricultural working machine (2), in particular to the regulating and control unit.

14. The agricultural working machine (2) according to one of the preceding claims,
**characterized in that**
at least one of the image data sets (20) which is suitable for further processing can be used by the agricultural working machine (2) for sensing of the surrounding area, in particular for the identification of anomalies (19) in the frontal area (9).

15. The agricultural working machine (2) according to one of the preceding claims,
**characterized in that**
the regulating and control unit (23) is configured so as to control the agricultural working machine (2) as a function of the anomalies (19), so that damage to the agricultural working machine (2), injury to living organisms, or picking up of plants which diminish the quality of the harvested crop is avoided and/or a standing field crop is efficiently harvested.

16. The agricultural working machine (2) according to one of the preceding claims,
**characterized in that**
the regulating and control unit (23) is configured to control the agricultural working machine (2) as a function of the image data set (20) which is suitable for further processing during the detection and identification of lodged grain (58) and/or weeds (61) in the frontal area (9) in a manner such that at least one attachment (22) is raised in front of the lodged grain (58) and/or the weeds (61).

17. The agricultural working machine (2) according to one of the preceding claims,
**characterized in that**
the regulating and control unit (23) is configured to control the agricultural working machine (2) as a function of the image data set (20) which is suitable for further processing during the detection and identification of lodged grain (58) in the frontal area (9) in a manner such that the at least one attachment (22) is lowered before the lodged grain (58).

18. The agricultural working machine (2) according to one of the preceding claims,
**characterized in that**
the regulating and control unit (23) is configured to control the agricultural working machine (2) as a function of the image data set (20) which is suitable for further processing during the detection and identification of obstacles (56) in the frontal area (9) in a manner such that the agricultural working machine (2) avoids the obstacles (56), in particular by raising attachments (22) above low obstacles (62), in particular by stopping the agricultural working machine (2) and/or in particular by driving round high obstacles (63).

19. The agricultural working machine (2) according to one of the preceding claims,
**characterized in that**
the regulating and control unit (23) is configured to control the agricultural working machine (2) as a function of the image data set (20) which is suitable for further processing during the detection and identification of a headland in a manner such that at the headland, the agricultural working machine (2) raises the at least one attachment (22).

20. The agricultural working machine (2) according to one of the preceding claims,
**characterized in that**
the regulating and control unit (23) is configured to control the agricultural working machine (2) as a function of the image data set (20) which is suitable for further processing during the detection and identification of a track (6) in a manner such that it drives in or along the track (60).

21. The agricultural working machine (2) according to one of the preceding claims,
**characterized in that**
the regulating and control unit (23) is configured to control the agricultural working machine (2) as a function of the image data set (20) which is suitable for further processing during the detection and identification of an edge of the standing crop in a manner such that the agricultural working machine (2) drives along the edge of the standing crop.

22. The agricultural working machine (2) according to one of the preceding claims,
**characterized in that**
the regulating and control unit (23) is configured to control the agricultural working machine (2) as a function of the image data set (20) which is suitable for further processing during the detection and identification of living organisms in the frontal area (9) in a manner such that the agricultural working machine (2) stops.

## Revendications

1. Machine de travail agricole (2) incluant un système de traitement d'images (1), une unité de régulation et de commande (23), une unité de sortie de données (21) et au moins un système de génération d'images (3), le système de traitement d'images traitant une sélection des images d'environnement (7) dans une unité d'analyse d'images (17), le système de génération d'images (3) étant agencé pour générer des images d'environnement (7) et pour transmettre les images d'environnement (7) au système de traitement d'images (1), **caractérisée en ce que** le système de traitement d'images (1) est agencé pour,
dans une première étape (S1), prétraiter les images d'environnement transmises (12) par l'intermédiaire d'au moins une normation des images d'environnement transmises (12) et d'au moins une normation d'intensité (27), une normation de couleur (28) et une sélection d'une zone d'analyse (29) dans les images d'environnement transmises (12), et, lors de la normation d'intensité (27), un facteur de correction d'intensité spécifique aux pixels est déterminé respectivement pour chaque pixel (7) au moyen d'au moins une image de référence (33), et l'intensité (35) de chaque pixel (31) des images d'environnement transmises (12) est corrigée avec le facteur de correction d'intensité spécifique aux pixels respectif,
dans une autre étape (S2), segmenter les images d'environnement prétraitées (13), le système de traitement d'images (1) segmentant, dans l'autre étape (S2), les images d'environnement prétraitées (13) en segments (16) avec des pixels (31) de couleur ou d'intensité identique ou analogue (35),
dans une étape suivante (S3), classifier les segments créés (16), le système de traitement d'images (1) classifiant dans l'étape suivante (S3) les segments (16) de façon à calculer d'abord à partir de chaque segment (16) respectivement au moins une caractéristique de segment (45), la au moins une caractéristique de segment (45) étant calculée à partir des intensités respectives (35) des pixels (31) du segment respectif (16) et/ou à partir des valeurs de gris des pixels (31) du segment respectif (16) et au moyen d'une machine à vecteurs de support, la machine à vecteurs de support étant un procédé mathématique pour classifier des segments (16), chaque segment (16) étant classifié dans une classe (18) au moyen de la au moins une caractéristique de segment calculée (45), et des images d'environnement classifiées (15) étant générées avec des segments classifiés (48), aux classes (18) étant associées des anomalies (19), et les anomalies (19) étant des objets (30) dans l'environnement (8) de la machine de travail agricole (2) qui ont une influence directe sur le fonctionnement de la machine de travail agricole (2),
à chaque classe (18) étant associée au moins une caractéristique de segment (45), de sorte que des images classifiées (15) avec des anomalies identifiables (19) sont créées,
et dans une étape suivante (S4), générer, à partir des images d'environnement classifiées (15) avec les segments classifiés (48), un ensemble de données d'images retraitable (20) au moyen d'une distorsion (51), d'un assemblage ou d'un transfert dans une grille d'occupation (52),
et l'unité de régulation et de commande (23) est agencée pour commande la machine de travail agricole à l'aide de l'ensemble de données d'images retraitable (20).

2. Machine de travail agricole (2) selon une des revendications précédentes, **caractérisée en ce que** la machine de travail agricole (2) comporte une unité d'affichage pour visualiser l'ensemble de données d'images retraitable (20) et les anomalies (19).

3. Machine de travail agricole (2) selon la revendication 1, **caractérisée en ce que** le système de génération d'images (3) inclut au moins un capteur optique, le au moins un capteur optique incluant une camera (4), un capteur radar (5) ou un scanner à laser, la camera (4) étant conformée en caméra monochrome, en caméra infrarouge ou en caméra couleur.

4. Machine de travail agricole (2) selon une des revendications précédentes, **caractérisée en ce que** la machine de travail agricole (2) comporte au moins un outil rapporté (22), en particulier un tablier de coupe.

5. Machine de travail agricole (2) selon une des revendications précédentes, **caractérisée en ce que** les images d'environnement (7) détectent un environnement (8) de la machine de travail agricole (2), l'environnement (8) incluant une zone environnante, en particulier une zone d'approche (9), de la machine de travail agricole (2) et/ou des parties de la machine de travail agricole (2) elle-même.

6. Machine de travail agricole (2) selon une des revendications précédentes, **caractérisée en ce que**, dans la première étape (S1), lors de la normation de couleur (28), une valeur de correction d'intensité est déterminée respectivement pour chaque canal de couleur des images d'environnement transmises (12), et les intensités (35) des pixels (31) de chaque canal de couleur sont corrigées uniformément selon la valeur de correction d'intensité respective, chaque valeur de correction d'intensité étant déterminée en déterminant une différence des intensités respectives mesurées (35) des pixels de couleur, associés au canal de couleur respectif, d'un objet de référence (34) avec une couleur connue dans les images d'environnement transmises (12) par rapport aux intensités respectives connues (35) des pixels de couleur, associés au canal de couleur respectif, d'un objet de référence (34) avec une couleur connue dans les images d'environnement transmises (12), les intensités respectives mesurées (35) étant déterminées en particulier à partir d'une sélection de pixels de couleur de l'objet de référence (34) avec une couleur connue et par formation d'une valeur moyenne dans l'environnement.

7. Machine de travail agricole (2) selon revendication une des revendications précédentes, **caractérisée en ce que** la sélection de la zone d'analyse (29) des images d'environnement transmises (12) inclut respectivement une portion des images d'environnement transmises (12), la zone d'analyse (29) s'étendant en particulier jusqu'à une distance de moins de 20 mètres par rapport au capteur optique (3), en outre en particulier jusqu'à une distance de six mètres par rapport au capteur optique (3).

8. Machine de travail agricole (2) selon une des revendications précédentes, **caractérisée en ce que**, dans l'autre étape (S2), le système de traitement d'images (1) segmente les images d'environnement prétraitées (13) i au moyen d'un procédé de superpixels, en outre en particulier au moyen d'un procédé de superpixels SEED.

9. Machine de travail agricole (2) selon une des revendications précédentes, **caractérisée en ce que**, à l'étape suivante (S3), le système de traitement d'images (1) les caractéristiques de segments (45) incluant une intensité minimale du segment respectif (16), une intensité maximale du segment respectif (16), une différence entre l'intensité maximale et minimale (16) du segment respectif (16), un histogramme du segment respectif (16), un gradient d'intensité horizontal du segment respectif (16), un gradient d'intensité vertical du segment respectif (16), un histogramme du gradient d'intensité vertical et/ou horizontal du segment respectif (16) et/ou au moins une valeur moyenne d'intensité du segment respectif (16), en particulier une valeur moyenne arithmétique d'intensité et/ou une médiane d'intensité du segment respectif (16).

10. Machine de travail agricole (2) selon une des revendications précédentes, **caractérisée en ce qu'**une sélection de caractéristiques de segments (16) est calculée à partir d'une matrice de valeurs de gris du segment respectif (16), en particulier une homogénéité, une énergie, une corrélation et/ou un contraste de la matrice de valeurs de gris, la matrice de valeurs de gris comportant une fréquence d'un appairage des zones d'intensité et/ou des zones de valeurs de gris de deux pixels voisins (31) du segment respectif (16), et/ou les caractéristiques de segments (45) incluant une position verticale dans l'image d'environnement segmentée (14) et/ou un centre de gravité formel du segment (16).

11. Machine de travail agricole (2) selon une des revendications précédentes, **caractérisée en ce que**, dans l'étape suivante (S3), le système de traitement d'images (1) au moyen, à chaque classe (18) étant associée au moins une caractéristique de segment, une qualité de classification des caractéristiques de segments (45) étant déterminée au préalable pour les classes respectives (18) et utilisée pour sélectionner les caractéristiques de segments les plus appropriées (45) pour la machine à vecteurs de support, et en particulier la machine à vecteurs de support (45) utilisant des caractéristiques de segments (45) avec une qualité de classification élevée, en particulier avec la qualité de classification maximale, pour classifier les segments (16), et en particulier les probabilités d'une classification correcte étant calculées pour chaque caractéristique de segment (45) et/ou segment (16).

12. Machine de travail agricole (2) selon une des revendications précédentes, **caractérisée en ce que** l'ensemble de données d'images retraitable (20) est réuni avec des ensembles de données d'autres capteurs, en particulier de capteurs optiques (3), et retraité en un autre ensemble de données d'images retraitable (20).

13. Machine de travail agricole (2) selon une des revendications précédentes, **caractérisée en ce que** l'unité de sortie de données (21) est agencée pour fournir au moins un des ensembles de données d'images retraitables (20) à d'autres systèmes d'une machine de travail agricole (2, en particulier à l'unité de régulation et de commande.

14. Machine de travail agricole (2) selon une des revendications précédentes, **caractérisée en ce qu'**au moins un des ensembles de données d'images retraitables (20) est utilisable par la machine de travail agricole (2) pour la reconnaissance de zone environnante, en particulier pour identifier des anomalies (19) dans la zone d'approche (9).

15. Machine de travail agricole (2) selon une des revendications précédentes, **caractérisée en ce que** l'unité de régulation et de commande (23) est agencée pour commander la machine de travail agricole (2) en fonction des anomalies (19) de façon à éviter d'endommager la machine de travail agricole (2), de blesser des êtres vivants, de ramasser des plantes nuisibles à la qualité du produit récolté et/ou de façon à récolter de manière efficiente une culture à récolter.

16. Machine de travail agricole (2) selon une des revendications précédentes, **caractérisée en ce que** l'unité de régulation et de commande (23) est agencée pour commander la machine de travail agricole (2) en fonction de l'ensemble de données d'images retraitable (20) en cas de détection et d'identification de céréale versée (58) et/ou de culture adventice (61) dans la zone d'approche (9), de façon qu'au moins un outil rapporté (22) soit relevé avant la céréale versée (58) et/ou la culture adventice (61).

17. Machine de travail agricole (2) selon une des revendications précédentes, **caractérisée en ce que** l'unité de régulation et de commande (23) est agencée pour commander la machine de travail agricole (2) en fonction de l'ensemble de données d'images retraitable (20) en cas de détection et d'identification de céréale versée (58) dans la zone d'approche (9), de façon à abaisser le au moins un outil rapporté (22) avant la céréale versée (58).

18. Machine de travail agricole (2) selon une des revendications précédentes, **caractérisée en ce que** l'unité de régulation et de commande (23) est agencée pour commander la machine de travail agricole (2) en fonction de l'ensemble de données d'images retraitable (20) en cas de détection et d'identification d'obstacles (56) dans la zone d'approche (9), de façon que la machine de travail agricole (2) évite les obstacles (56), en particulier en relevant des outils rapportés (22) au-dessus d'obstacles bas (62), en particulier en arrêtant la machine de travail agricole (2) et/ou en particulier en contournant des obstacles hauts (63) .

19. Machine de travail agricole (2) selon une des revendications précédentes, **caractérisée en ce que** l'unité de régulation et de commande (23) est agencée pour commander la machine de travail agricole (2) en fonction de l'ensemble de données d'images retraitable (20) en cas de détection et d'identification d'une tournière, de façon que la machine de travail agricole (2) relève le au moins un outil rapporté (22) au niveau de la tournière.

20. Machine de travail agricole (2) selon une des revendications précédentes, **caractérisée en ce que** l'unité de régulation et de commande (23) est agencée pour commander la machine de travail agricole (2) en fonction de l'ensemble de données d'images retraitable (20) en cas de détection et d'identification d'une trace de roulement (60), de façon qu'elle roule dans ou le long de la trace de roulement (60).

21. Machine de travail agricole (2) selon une des revendications précédentes, **caractérisée en ce que** l'unité de régulation et de commande (23) est agencée pour commander la machine de travail agricole (2) en fonction de l'ensemble de données d'images retraitable (20) en cas de détection et d'identification d'un bord de culture, de façon à ce que la machine de travail agricole (2) roule le long du bord de culture.

22. Machine de travail agricole (2) selon une des revendications précédentes, **caractérisée en ce que** l'unité de régulation et de commande (23) est agencée pour commander la machine de travail agricole (2) en fonction de l'ensemble de données d'images retraitable (20) en cas de détection et d'identification d'êtres vivants dans la zone d'approche (9), de façon que la machine de travail agricole (2) s'arrête.
